(19) Europäisches Patentamt
European Patent Office
Office européen des brevets

(11) **EP 4 651 048 A1**

(12) **EUROPEAN PATENT APPLICATION**

(43) Date of publication:
**19.11.2025 Bulletin 2025/47**

(21) Application number: **25160637.2**

(22) Date of filing: **27.02.2025**

(51) International Patent Classification (IPC):
*G06Q 10/0631* (2023.01)   *G06Q 10/0637* (2023.01)
*G06Q 10/067* (2023.01)   *G06Q 10/10* (2023.01)
*G06Q 50/04* (2012.01)

(52) Cooperative Patent Classification (CPC):
**G06Q 10/0631; G06Q 10/06311; G06Q 10/063114;
G06Q 10/063116; G06Q 10/063118;
G06Q 10/06316; G06Q 10/06375; G06Q 10/067;
G06Q 10/10; G06Q 50/04**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2024 JP 2024079163**

(71) Applicant: **Hitachi, Ltd.
Tokyo 100-8280 (JP)**

(72) Inventors:
• **HAGIWARA, Takehiro
Tokyo, 100-8280 (JP)**

• **ISHIDA, Hitoshi
Tokyo, 100-8280 (JP)**
• **INOUE, Ikumi
Tokyo, 100-8280 (JP)**
• **PANG, Yuanfeng
Tokyo, 100-8280 (JP)**
• **KAWAMURA, Riku
Tokyo, 100-8280 (JP)**

(74) Representative: **MERH-IP Matias Erny Reichl
Hoffmann
Patentanwälte PartG mbB
Paul-Heyse-Straße 29
80336 München (DE)**

(54) **INFORMATION PROCESSING SYSTEM AND INFORMATION PROCESSING METHOD**

(57) An information processing system holds: start-to-completion achievement data which is selected from site data relating to a process including tasks and in which a data item indicating a predetermined meaning is specified; and meaning estimation target data selected from the site data; estimates a candidate of a data item indicating the predetermined meaning from the data items of the meaning estimation target data based on a feature amount of the data item of the start-to-completion achievement data indicating the predetermined meaning and a feature amount of each data item included in the meaning estimation target data; and estimate a data item indicating the predetermined meaning from the candidates based on a result of the comparing the start-to-completion achievement data and the meaning estimation target data in a case in which the candidate is the data item indicating the predetermined meaning.

*FIG. 1*

**Description**

CLAIM OF PRIORITY

The present application claims priority from Japanese patent application JP 2024-079163 filed on May 15, 2024, the content of which is hereby incorporated by reference into this application.

BACKGROUND OF THE INVENTION

The present invention is related to an information processing system and an information processing method.

In each task in the manufacturing industry, generation or collection of site data is triggered by completion of the task or occurrence of a predetermined event. A site worker analyzes this site data to increase work efficiency.

When departments managing the respective tasks are different, information sharing among the departments is sometimes difficult due to a difference in a system for task management among the departments, for example. Moreover, each department analyzes the site data collected by this department, to thereby increase the work efficiency of the task in this department, but cooperation among the departments is essential for an increase in work efficiency of an entire manufacturing process. It is considered that the cooperation among the departments is promoted by presenting, to each department, not only the site data collected in this department, but also pieces of site data generated in the entire manufacturing process in association with one another.

The above-mentioned situation is not unique to the manufacturing site, and the same applies to an industry type having a series of process formed of a plurality of tasks, for example, the distribution industry, the retail industry, or the service industry.

As the related art in this technical field, there are JP 2022-20927 A and WO 2018/025707 A1. In JP 2022-20927 A, there is disclosed a process model creating section which "creates a process model representing the relation of site data generated at a manufacturing site, and tasks included in a process including a plurality of steps, on the basis of the site data."

In WO 2018/025707 A1, it is disclosed that "A learning means learns, on the basis of learning data including a table including a meaning of a column, and a meaning of the table, a model indicating regularity between a distribution of attribute values according to the meaning of the column in the table and the meaning of the table. An estimating means estimates, on the basis of a distribution of attribute values according to a meaning of a column in an input table and the model, a meaning of the table."

The process model creating section as disclosed in JP 2022-20927 A creates, from the site data generated from the tasks included in the manufacturing process, the process model which defines a data structure of the site data, but it is premised that a meaning of a data item of this site data is known. However, a technology of creating the process model through use of site data having an unknown meaning of the data item is not disclosed in JP 2022-20927 A.

In order to create the process model which defines the data structure of the site data generated in the manufacturing process from this site data, the technology as disclosed in JP 2022-20927 A is required to extract, from the site data, information on when and where work for a manufacturing target in the manufacturing process has been done.

In the site data generated in the manufacturing process, in general, information relating to an identifier for identifying the manufacturing target, information indicating a timing such as a time, and information relating to an identifier for identifying the work are sometimes recorded at a plurality of portions.

For example, in some cases, in a certain table of the site data, a command ID for identifying the work target, a product ID for identifying a processing target, and a package ID for identifying a transport target are recorded in columns different from one another, an area ID for identifying a work position and a step ID for identifying a work step are recorded in columns different from each other, and a completion time for indicating a time of passage through the step and a record time for indicating a time of recording the data are recorded in columns different from each other.

In WO 2018/025707 A1, there is disclosed a technology of "learning means configured to learn, on the basis of learning data including a meaning of a column of a table and a meaning of the table, a model indicating regularity between the meaning of the column in the table and the meaning of the table; and estimating, on the basis of a meaning of a column in an input table and the model, a meaning of the table," but a technology of estimating the meaning of the site data for creating the process model from the site data is not disclosed.

In view of the above, at least one aspect of this invention is to estimate a meaning of a data item of site data for creating a process model.

SUMMARY OF THE INVENTION

The at least one adopts the following structures in order to solve the above-mentioned problems. An information processing system includes: a processor; and a memory, wherein the memory holds: start-to-completion achievement data which is selected from site data relating to a process including a plurality of tasks and in which a data item indicating a predetermined meaning is specified; meaning estimation target data selected from the site data; a feature amount of the data item of the start-to-completion achievement data indicating the predetermined meaning; and a feature amount of each data item included in the meaning estimation target data, and wherein the processor is configured to: estimate a candidate of a data item indicating the predetermined meaning from the data items of the meaning estimation target data based on the feature amount of the data item of the start-to-completion achievement data indicating the predetermined meaning and the feature amount of each of the data item included in the meaning estimation target data; execute comparison processing of comparing the start-to-completion achievement data and the meaning estimation target data in a case in which the candidate is the data item indicating the predetermined meaning with each other; and/or estimate a data item indicating the predetermined meaning from the candidates based on a result of the comparison processing.

The at least one aspect of this invention can estimate a meaning of a data item of site data for creating a process model.

Problems, configurations, and effects which are not mentioned above are explained in the following embodiments.

BRIEF DESCRIPTION OF THE DRAWINGS

FIG. 1 is a block diagram for illustrating a configuration example of a management system including a process model creation system according to the First Embodiment.

FIG. 2A is a block diagram for illustrating a functional configuration example of the process model creation system according to the First Embodiment.

FIG. 2B is a block diagram for illustrating a hardware configuration example of the process model creation system according to the First Embodiment.

FIG. 3 is a sequence diagram for illustrating an example of an operation procedure from the creation of data meaning information to the provision thereof according to the First Embodiment.

FIG. 4A is a table for showing a data configuration example of site data according to the First Embodiment.

FIG. 4B is a table for showing an example of information included in the site data according to the First Embodiment.

FIG. 5 is an explanatory diagram for illustrating an example of a relationship between a manufacturing process and tasks according to the First Embodiment.

FIG. 6 is an explanatory diagram for illustrating an example of a process model relating to the manufacturing process according to the First Embodiment.

FIG. 7 is a table for showing a data configuration example of data meaning information according to the First Embodiment.

FIG. 8 is a flowchart for illustrating an example of partial processing executed by the process model creation system according to the First Embodiment.

FIG. 9 is a flowchart for illustrating an example of process flow creation processing according to the First Embodiment.

FIG. 10A is a diagram illustrating an example of an ununified process flow according to the First Embodiment.

FIG. 10B is a diagram illustrating an example of an ununified process flow according to the First Embodiment.

FIG. 10C is a diagram illustrating an example of a unified process flow according to the First Embodiment.

FIG. 11 is a flowchart for illustrating an example of data meaning candidate estimation processing according to the First Embodiment.

FIG. 12A is a table for showing a data configuration example of a table of a data meaning estimation target according to the First Embodiment.

FIG. 12B is a table for showing a data configuration example of data meaning candidate information according to the First Embodiment.

FIG. 13 is a flowchart for illustrating an example of data meaning estimation processing according to the First Embodiment.

FIG. 14 is an explanatory diagram for illustrating an example of the processing of calculating the conformity to the process flow according to the First Embodiment.

FIG. 15 is an explanatory diagram for illustrating an example of the processing of calculating the conformity to the process flow according to the First Embodiment.

FIG. 16 is an explanatory diagram for illustrating an example of the processing of calculating the conformity to the process flow according to the First Embodiment.

FIG. 17 is an explanatory diagram for illustrating an example of the processing of calculating the conformity to the process flow according to the First Embodiment.

FIG. 18A is a view for illustrating a screen configuration example of a start-to-completion achievement data setting screen according to the First Embodiment.

FIG. 18B is a view for illustrating a screen configuration example of a process flow display screen according to the First Embodiment.

FIG. 19A is a view for illustrating a screen configuration example of a data meaning estimation target setting screen according to the First Embodiment.

FIG. 19B is a view for illustrating a screen configuration example of a data meaning estimation result display screen according to the First Embodiment.

FIG. 20 is an explanatory diagram for illustrating an example of processing of estimating meaning of a table from table data meaning candidate information according to the Second Embodiment.

FIG. 21 is an explanatory diagram for illustrating an example of processing of estimating the data meaning information from the process model according to the Third Embodiment.

DETAILED DESCRIPTION OF THE PREFERRED EMBODIMENTS

In the following, embodiments of the present invention are explained referring the drawings. Note that the following embodiments are not intended to limit the invention related to the claims, and not all of the elements and not all of the combinations thereof described in the embodiments are necessarily essential to the solution of the invention.

In the embodiments, description is mainly given of an example in which a process model creation system is applied to an information collection system which collects site data generated in each manufacturing step and/or a task in the manufacturing step in a manufacturing plant, but the process model creation system can similarly be applied to an information collection system to be used for a process including a plurality of continuous tasks and steps in any types of industries, for example, the distribution industry, the retail industry, or the service industry.

In the embodiments, a case in which a data format of the site data is a table formed of one or more columns is exemplified for description, but the data format may be another data format, for example, a JavaScript Object Notation (Json).

[First Embodiment]

[Network]

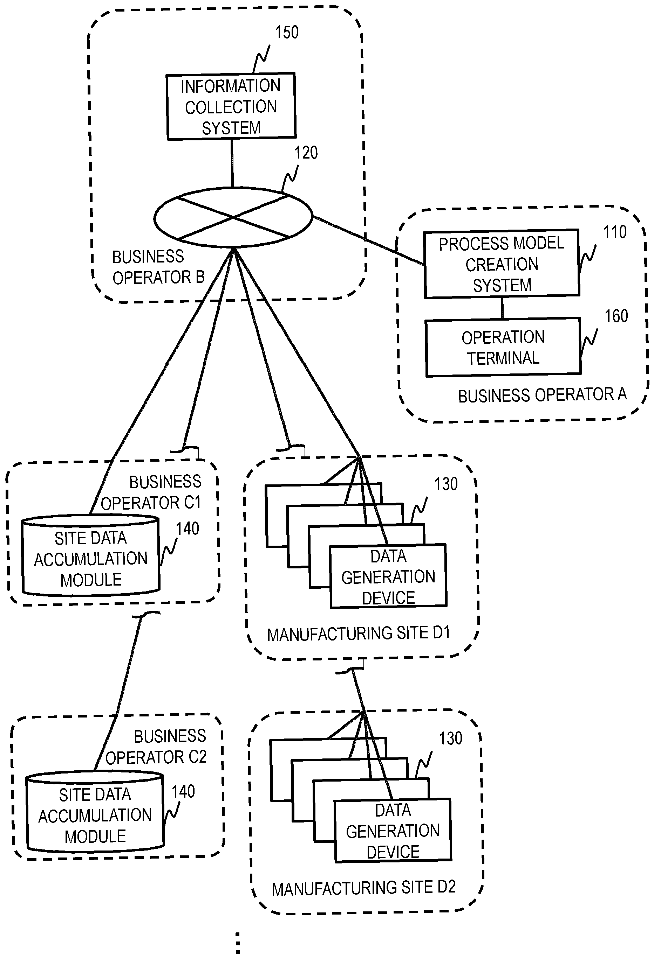

FIG. 1 is a block diagram for illustrating a configuration example of a management system including a process model creation system 110. The process model creation system 110 is coupled to a network 120, for example, the Internet. One or more data generation devices 130, one or more site data accumulation modules 140, and an information collection system 150 are coupled to the network 120.

An operation terminal 160 for operating the process model creation system 110 is coupled to the process model creation system 110. The operation terminal 160 is a computer including an input device and a display device, and is, for example, a personal computer (PC), a smartphone, or a tablet terminal.

The data generation device 130 may be, for example, a barcode reader, a PC, or a server which acquires a work log of a worker, a machine which processes a component, or assembles a final product, or a sensor which collects inspection information of a radio frequency identifier (RFID) attached to the component or the final product. The data generation device 130 transmits the site data collected or generated by the data generation device 130 itself to the site data accumulation module 140 via the network 120.

The site data accumulation module 140 is a storage device, for example, a server or a memory, and accumulates the site data received from the data generation device 130. The site data indicates information relating to a process including a plurality of tasks.

The information collection system 150 collects information relating to execution of the task. The information relating to the execution of the task includes, for example, an execution record relating to the execution of the task. The execution record relating to the execution of the task may include task information relating to the execution of the task and task-associated information associated with this task. For example, the task-associated information is information indicating at least one of an object, a person, a facility, a procedure, or the like relating to the execution of the task.

The information collection system 150 holds a process model which reproduces, in a digital space, a task process at a manufacturing site in which the data generation devices 130 are disposed. The process model is a model which indicates which workers, machines, components, and the like are associated, in which work procedure and in which manner, with each task included in the process. In the process model, metadata of the data generated in the data generation device 130 and then accumulated in the site data accumulation module 140 is included, and the information collection system 150 can use the process model to collect the data from the site data accumulation module 140.

Some of or all of a business operator A holding the process model creation system 110, a business operator B holding the information collection system 150, and business operators C1 and C2 each holding the site data accumulation module 140 may be the same. Some of or all of the process model creation system 110, the data generation devices 130, the site data accumulation modules 140, and the information collection system 150 may be disposed in the same place. Some of or all of the process model creation system 110, the data generation devices 130, the site data accumulation modules 140, the information collection system 150, and the operation terminal 160 may be one integrated device.

[System Configuration]

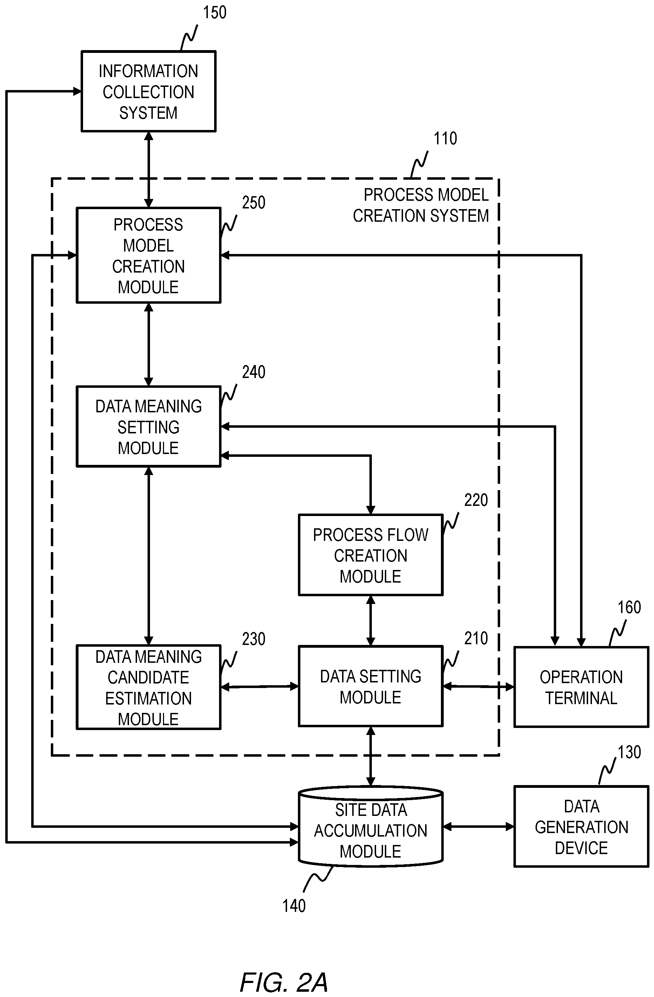

FIG. 2A is a block diagram for illustrating a functional configuration example of the process model creation system 110. The process model creation system 110 includes, for example, a data setting module 210, a process flow creation module 220, a data meaning candidate estimation module 230, a data meaning setting module 240, and a process model creation module 250, any one of which is a function module.

As described above, the process model creation system 110 is coupled to the operation terminal 160, and is further coupled to the site data accumulation module 140 via the network 120. The operation terminal 160 provides, to a user, an environment for inputting predetermined information to the data setting module 210 and the data meaning setting module 240.

The data setting module 210 sets, as start-to-completion achievement data, site data selected from the site data accumulated in the site data accumulation module 140. The process flow creation module 220 creates a process flow from the start-to-completion achievement data.

The data meaning candidate estimation module 230 sets, as data of a data meaning estimation target, site data selected from the site data accumulated in the site data accumulation module 140, and estimates candidate columns corresponding to specific meanings (data meanings) out of columns (an example of data items) included in this data. The data meaning setting module 240 determines, from the candidate columns corresponding to the specific meanings in the data of the data meaning estimation target, columns corresponding to those specific meanings, that is, sets data meanings. The process model creation module 250 uses the process flow created by the process flow creation module 220 and the data meanings set by the data meaning setting module 240 to create the process model, and provides the process model to the information collection system 150.

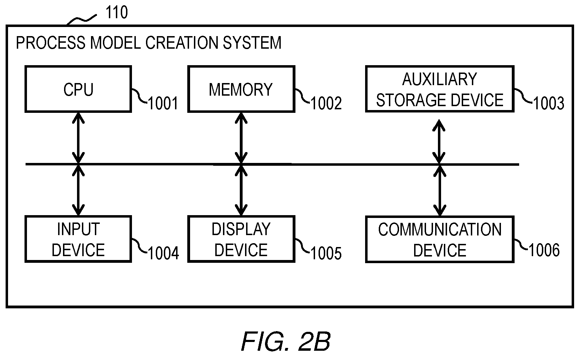

FIG. 2B is a block diagram for illustrating a hardware configuration example of the process model creation system 110. The process model creation system 110 is formed of, for example, a computer including a central processing unit (CPU) 1001, a memory 1002, an auxiliary storage device 1003, an input device 1004, a display device 1005, and a communication device 1006.

The CPU 1001 is an example of a processor, and executes a program stored in the memory 1002. The memory 1002 includes a read only memory (ROM), which is a nonvolatile memory device, and a random access memory (RAM), which is a volatile memory device. The ROM stores, for example, an invariant program (for example, basic input/output system (BIOS)). The RAM is a dynamic random access memory (DRAM) or other such high-speed and volatile memory device, and temporarily stores a program to be executed by the CPU 1001 and data to be used when the program is executed by the CPU 1001.

The auxiliary storage device 1003 is, for example, a large-capacity and nonvolatile storage device such as a magnetic storage device (hard disk drive (HDD)) and a flash memory (solid state drive (SSD)). Programs to be executed by the CPU 1001 and data to be used when the programs are executed by the CPU 1001 are stored in the auxiliary storage device 1003. Specifically, the programs are read out from the auxiliary storage device 1003, loaded onto the memory 1002, and executed by the CPU 1001.

The input device 1004 is a device, such as a keyboard or a mouse, which receives input from a user. The display device 1005 is a device, such as a display device or a printer, which outputs an execution result of a program in a form visually recognizable by the user.

The communication device 1006 is a network interface device which controls communication to and from another device in accordance with a predetermined protocol. Further, the communication device 1006 may include, for example, a serial interface such as a universal serial bus (USB).

All or some of the programs executed by the CPU 1001 may be provided to the process model creation system 110 from a removable medium (such as a CD-ROM or a flash memory) being a non-transitory storage medium or from an external computer including a non-transitory storage device via a network, and may then be stored in the nonvolatile auxiliary storage device 1003 being a non-transitory storage medium.

The process model creation system 110 is a computer system formed on physically one computer or formed on a plurality of computers that are configured logically or physically, and may be operated on separate threads on the same computer, or may operate on a virtual machine built on a plurality of physical computer resources.

The CPU 1001 includes each function module included in the process model creation system 110. For example, the CPU 1001 operates in accordance with a data setting program loaded onto the memory 1002, to thereby function as the data setting module 210, and operates in accordance with a process flow creation program loaded onto the memory 1002, to thereby function as the process flow creation module 220. This applies to other function modules included in the process model creation system 110.

Some of or all of the functions provided by the function modules included in the process model creation system 110 may be implemented by hardware, for example, an application specific integrated circuit (ASIC), a field-programmable gate array (FPGA), or the like.

Information held by each device included in the management system may be independent of the data structure, and may be expressed in any data structure. For example, a data structure appropriately selected from a list, a table, a database, and a queue can store the information.

[Operation Procedure]

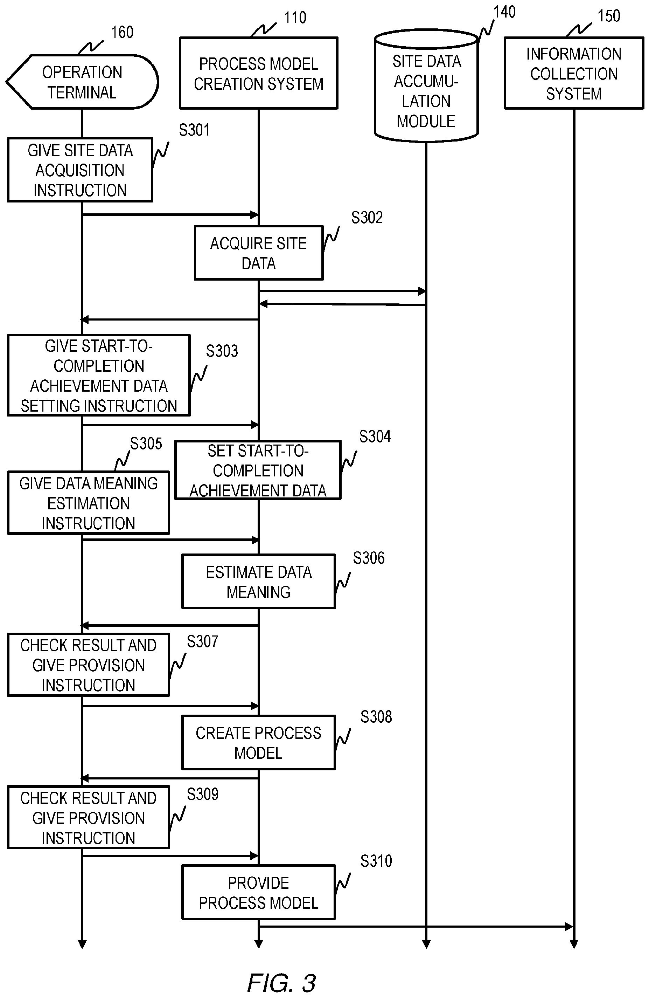

FIG. 3 is a sequence diagram for illustrating an example of an operation procedure from the creation of data meaning information to the provision thereof. The operation terminal 160 receives input of an instruction to acquire site data in accordance with input of a user who uses the process model creation system 110 (hereinafter also simply referred to as "user"), and transmits this instruction to the process model creation system 110 (S301). The site data acquisition instruction includes, for example, a condition (for example, a time slot of generation, a place of generation, and the like of the site data) relating to the site data to be acquired.

The data setting module 210 of the process model creation system 110 acquires site data (tables) from the site data accumulation module 140 in accordance with the condition relating to the site data to be acquired, and transmits the acquired data to the operation terminal 160 and then displays the data thereon, to thereby present this data to the user (S302).

The operation terminal 160 executes, in accordance with the input of the user, processing of selecting one or more tables from the tables presented in Step S302 and processing of selecting, in each of those tables, columns indicating predetermined meanings (for example, columns corresponding to manufacturing target IDs described later, columns corresponding to task IDs, and columns corresponding to task execution times), and further transmits, to the process model creation system 110, a start-to-completion achievement data setting instruction indicating the selected tables and the columns corresponding to the predetermined items (S303). The column corresponding to the manufacturing target **ID** is an example of a tracking target identification item indicating information for identifying a tracking target in the process. The column corresponding to the task **ID** is an example of a tracking location identification item indicating information for identifying a tracking location in the process. The column corresponding to the task execution time is an example of a timing item indicating a timing at which the tracking target exists at the tracking location in the process.

The data setting module 210 of the process model creation system 110 sets start-to-completion achievement data in accordance with the tables and the columns corresponding to the predetermined items indicated by the start-to-completion achievement data setting instruction (S304). Setting processing for the start-to-completion achievement data is described in detail later.

After that, the operation terminal 160 selects, from the site data (tables) presented in Step S302, one or more tables excluding the tables selected in Step S303 in accordance with input of the user, generates a data meaning estimation instruction indicating the selected tables, and transmits this instruction to the process model creation system 110 (S305).

The data setting module 210 of the process model creation system 110 acquires the tables indicated by the data meaning estimation instruction from the site data accumulation module 140. The data meaning candidate estimation module 230 and the data meaning setting module 240 estimate data meaning information for the acquired tables based on the information on the start-to-completion achievement data set in Step S304, and transmit an estimation result to the operation terminal 160 and then display the estimation result thereon, to thereby present the estimation result to the user (S306).

The operation terminal 160 checks the estimation result of the data meaning information presented in Step S306 in accordance with input of the user who uses the process model creation system 110, generates an instruction indicating whether or not the process model creation is to be executed through use of the data meaning information indicated by this estimation result, and transmits this instruction to the process model creation system 110 (S307). The operation terminal 160 may correct the data meaning information indicated by this estimation result in accordance with the input of the user, and in this case, includes the corrected data meaning information into the instruction indicating whether or not the process model creation is to be executed.

When the process model creation module 250 of the process model creation system 110 receives the instruction indicating that the process model creation is to be executed, the process model creation module 250 creates the process model from the data meaning information indicated by this estimation result, and transmits a creation result of the process model to the operation terminal 160 and then displays the creation result thereon, to thereby present the creation result to the user (S308).

The operation terminal 160 checks the process model presented in Step S307 in accordance with the instruction of the user who uses the process model creation system 110, and transmits, to the process model creation system 110, an instruction indicating whether or not the presented process model is to be provided to the information collection system 150 (S309). The operation terminal 160 may correct the process model in accordance with the input of the user, and in this case, includes the corrected process model into the instruction indicating whether or not the process model is to be provided to the information collection system 150.

When the process model creation module 250 of the process model creation system 110 receives the instruction indicating that the process model is to be provided to the information collection system 150, the process model creation module 250 provides the process model to the information collection system 150 (S310).

As long as the processing of estimating the data meaning information for the site data acquired from the site data accumulation module 140, the processing of creating the process model from the estimated data meaning information, and the processing of providing the created process model to the information collection system 150 are executed, an order of executing the processing steps of from Step S301 to Step S310 may partially be switched.

[Content of Site data]

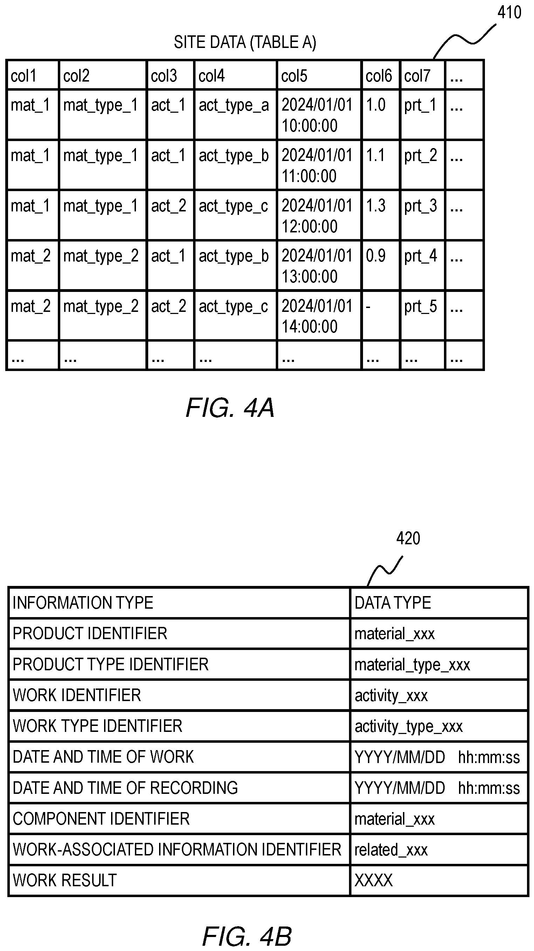

FIG. 4A is a table for showing a data configuration example of the site data. In the site data accumulation module 140, a plurality of tables of the site data are accumulated, and a table 410 is one of the plurality of tables, and it is assumed that a name of the table 410 is "table A." As the table 410 of FIG. 4A indicates, each table of the site data includes one or more columns. The table 410 includes col1 to col7, each of which is the column. The data meaning is not required to be added to some of or all of the columns of each table of the site data (that is, information indicated by this column may be unknown).

FIG. 4B is a table for showing an example of information included in the site data. Each table of the site data may hold, for example, part of or all of information of types indicated in a table 420, may hold none of information of those types, or may hold information of a type not indicated in the table 420. The table 420 is shown to describe an example of information that may be included in the site data in the first embodiment, and is not required to be stored in the site data accumulation module 140.

The information types indicated by the table 420 include, for example, a product identifier, a product type identifier, a work identifier, a work type identifier, a date and time of work, a date and time of recording, a component identifier, a work-associated information identifier, and a work result. The product identifier is information for uniquely identifying a product. The product type identifier is information for uniquely identifying a product type. The work identifier is information for uniquely identifying work. The work type identifier is information for uniquely identifying a work type. In the table 420, a data type of the information of each type is written.

The date and time of work is an example of information indicating a timing of execution of the work. As the information indicating the timing of the execution of the work, a plurality of types of date and time such as start date and time and end date and time of work may be included. The date and time of recording is an example of information indicating a timing of recording of the data.

The component identifier is information for uniquely identifying a component that has been used to create the product. When the component before the work and the product after the work are identified as the same materials, the value of the product identifier may be the same as the value of the component identifier. When a plurality of components are used to create the product, a plurality of component identifiers may be registered in one record (or one cell) of the table of the site data. The work-associated information identifier is information for uniquely identifying information associated with the work. The work result is information indicating a result of the work.

In the example of the table 410 of the site data of FIG. 4A, it is assumed that col1 corresponds to the product identifier, col2 corresponds to the product type identifier, col3 corresponds to the work identifier, col4 corresponds to the work type identifier, col5 corresponds to the date and time of work, col6 corresponds to the work result, and col7 corresponds to the product identifier. In the following description, a case in which time information is used as the information indicating the timing at which the work included in the site data is executed is exemplified.

[Process Configuration]

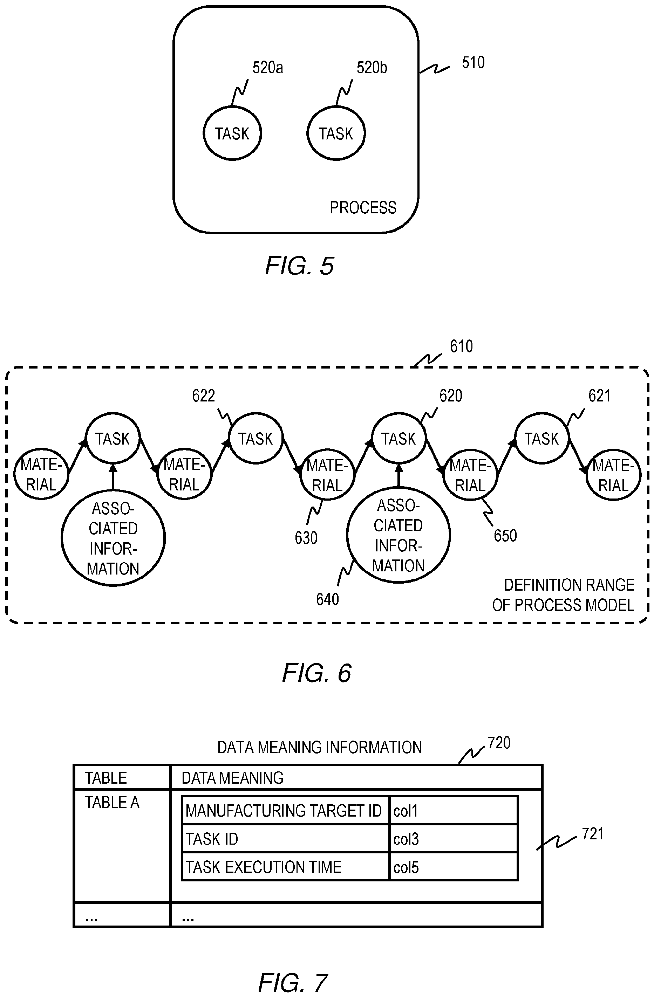

FIG. 5 is an explanatory diagram for illustrating an example of a relationship between a manufacturing process and tasks. The manufacturing process includes one or more tasks for creating the product. In the example of FIG. 5, a process 510 includes, for example, a task 520a and a task 520b.

[Process Model Configuration]

FIG. 6 is an explanatory diagram for illustrating an example of the process model relating to the manufacturing process. A process model 610 is a model which is generated by associating the site data generated from various devices (data generation devices 130) relating to each task included in the process, and indicates which workers, machines, components, and the like are associated, in which work procedure and in which manner, with each task included in the process.

The process model 610 is expressed as, for example, a directed graph including task nodes (nodes written as "task" in FIG. 6), material nodes (nodes written as "material" in FIG. 6), and task-associated information nodes (nodes written as "associated information" in FIG. 6).

The task node is a node associated with the task, and each of a node 620, a node 621, and a node 622 is an example of the task node. The material node is a node associated with a material. The material node includes a component node which is a node associated with a material required to execute the task and a product node associated with a product generated as a result of the execution of the task while the component is used as the material. Each of the node 630 and the node 650 is an example of the material node. It is assumed that the node 630 corresponds to the component node, and the node 650 corresponds to the product node.

For example, it is assumed that a product associated with the node 650 being the product node is a material (component) used in a following task associated with the task node 621, and a material associated with the node 630 being the component node is a product generated in a preceding task associated with the node 622 being the task node. At this time, the node 620 being the task node and the node 622 being the task node are associated with each other via the node 630 being the component node, and the node 620 being the task node and the node 621 being the task node are associated with each other via the node 650 being the product node. In other words, a meaning of an attribute in the material associated with the node 630 being the component node and a meaning of an attribute in the material associated with the node 650 being the product node are of the same types, and when it is not required to particularly distinguish the component and the product from each other, any one thereof may be treated as a simple material node.

The task-associated information node is a node associated with the work procedure defining a worker who executes the task, a machine used to execute the task, and/or an execution procedure of the task, and a node 640 is an example of the task-associated information node.

The material (Material) node including the component node and the product node, and the task-associated information node 640 associated with the worker (Man), a facility (Machine), the work procedure (Method), and/or the like are sometimes referred to as "4M information," and sometimes referred to as "4M node."

The task-associated information is not limited to the 4M information, for example, may be 5M information including information on measurement (Measurement) made in the task, may be any one of 1M information to 3M information which does not include any one or more of "M"s in the 4M information, or may include information relating to quality of the product for which the task has been executed. The task-associated information may include information on an environment (Environment) in which the task has been executed, and/or information on a management state (Management) or the like.

For example, it is assumed that an edge having the material node as a start point is connected to the task node, an edge having the task node as the start point is connected to the material node, and an edge having the task-associated information node as the start point is connected to the task node. For example, an edge having each of a plurality of material nodes as the start point may be connected to one task node, an edge having each of a plurality of task-associated information nodes as the start point may be connected to one task node, or a plurality of edges having one task node as the start point may exist (the plurality of edges are connected to material nodes different from one another).

[Data Meaning Information]

FIG. 7 is a table for showing a data configuration example of the data meaning information. Data meaning information 720 indicates a column corresponding to the manufacturing target ID, a column corresponding to the task ID, and a column corresponding to the task execution time in each of one or more tables of the site data. The manufacturing target ID is information for identifying a manufacturing target. The manufacturing target is synonymous with the material, that is, includes the component and the product. The task ID is information for identifying the task forming the manufacturing process. The task node included in the process model is distinguished in units of the task ID. The task execution time is information indicating the timing at which the task was executed for the manufacturing target. Any time during the task execution including a task start time and a task completion time is an example of the task execution time.

In the example of FIG. 7, the data meaning information 720 indicates that, in "table A" (that is, the table 410 shown in FIG. 4A) of the site data, col1 corresponds to the manufacturing target ID, col3 corresponds to the task ID, and col5 corresponds to the task execution time.

The tables of the site data may include a table which does not include some or any of the column corresponding to the manufacturing target ID, the column corresponding to the task ID, and the column corresponding to the task execution time. In the following description, the information relating to one table in the data meaning information 720 is also referred to as "table data meaning information." For example, information stored in a cell 721 in the data meaning information 720 of FIG. 7 is the table data meaning information relating to "table A."

[Data Meaning Estimation Processing]

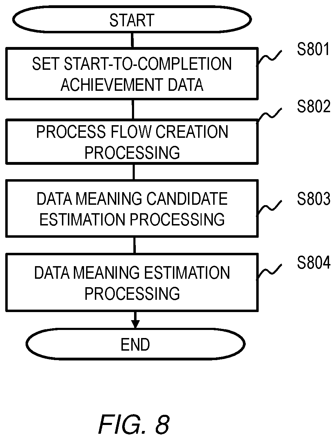

FIG. 8 is a flowchart for illustrating an example of partial processing executed by the process model creation system 110. The processing illustrated in FIG. 8 corresponds to the processing steps of from Step S303 to Step S306 illustrated in FIG. 3.

The data setting module 210 receives the start-to-completion achievement data setting instruction from the operation terminal 160, and sets the start-to-completion achievement data in accordance with the received start-to-completion achievement data setting instruction (S801). As described above, the start-to-completion achievement data setting instruction includes the information indicating one or more tables and the information indicating the columns corresponding to the manufacturing target ID, the columns corresponding to the task ID, and the columns corresponding to the task execution time in each of the one or more tables.

Thus, in Step S801, the data setting module 210 refers to the start-to-completion achievement data setting instruction to acquire one or more tables from the site data accumulation module 140, and adds information indicating the columns corresponding to the manufacturing target ID, the task ID, and the task execution time to each of the acquired one or more tables, to thereby set each of the one or more tables as the start-to-completion achievement data.

The start-to-completion achievement is an achievement generated from the start to the completion of the task, and the start-to-completion achievement data is a table including at least the columns for the manufacturing target ID, the task ID, and the task execution time.

In Step S801, for example, col1 of the table 410 of the site data shown in FIG. 4A is determined as the manufacturing target ID, col3 thereof is determined as the task ID, and col5 thereof is determined as the task time information. The table 410 is set as the start-to-completion achievement data.

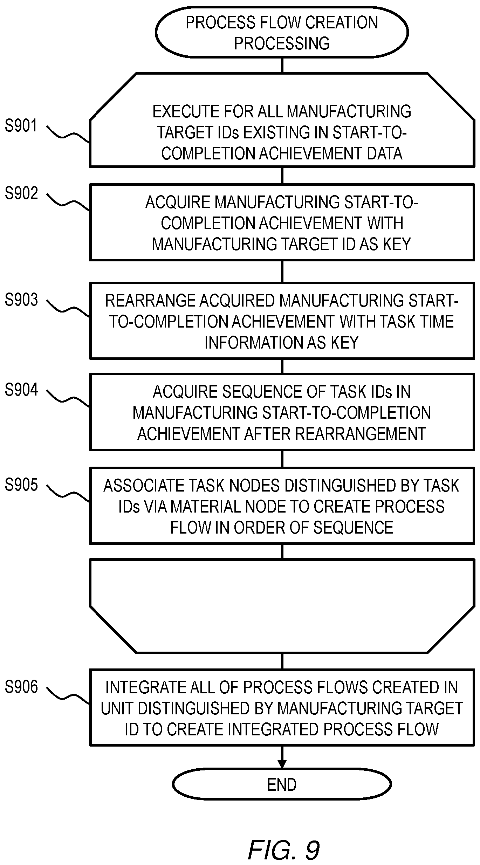

The process flow creation module 220 creates a process flow based on the start-to-completion achievement data set by the data setting module 210 (S802). With reference to FIG. 9 and the like, details of process flow creation processing in Step S802 are described later.

Here, the process flow indicates a sequence formed of the task nodes and the material nodes forming the process model. In other words, the process flow indicates information on passing of the material (example of the tracking target) through the tasks (examples of the tracking location). The process flow and the process model are different from each other in such a point that the task-associated information nodes are not included in the process flow, and the task-associated information nodes may be included in the process model. A sequence formed of the node 622 being the task node, the node 630 being the material node, the node 620 being the task node, and the node 650 being the material node in FIG. 6 is an example of the process flow.

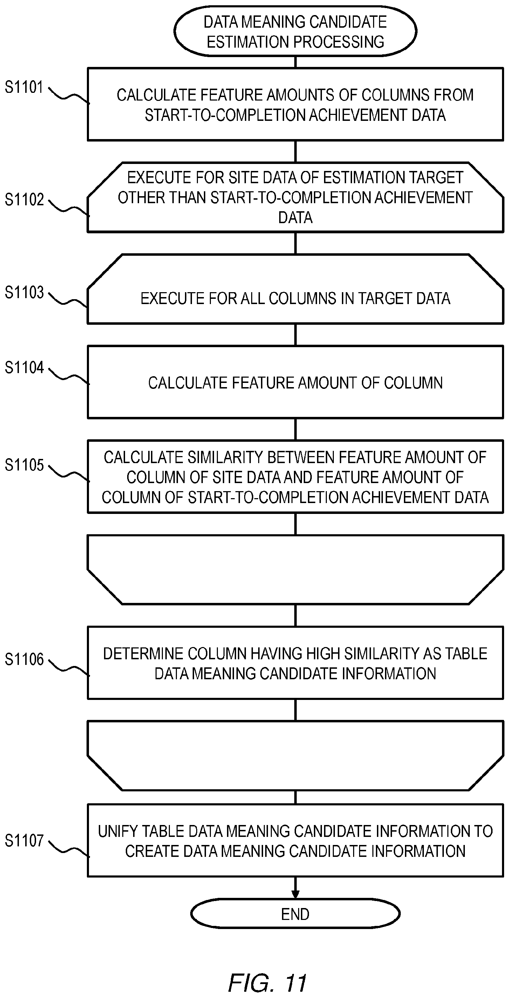

The data setting module 210 receives the data meaning estimation instruction from the operation terminal 160, acquires, from the site data accumulation module 140, one or more tables of the site data (different from the start-to-completion achievement data) indicated by the data meaning estimation instruction. The data meaning candidate estimation module 230 estimates, based on the start-to-completion achievement data set by the data setting module 210, which columns are candidates of the manufacturing target ID, which columns are candidates of the task ID, and which columns are candidates of the task time information for each of the acquired one or more tables (S803). With reference to FIG. 11 and the like, details of the data meaning candidate estimation processing in Step S803 are described later.

Information indicating the candidates of the column corresponding to the manufacturing target ID, the candidates of the column corresponding to the task ID, and the candidates of the column corresponding to the task time information estimated for each table of the site data is also referred to as "data meaning candidate information." Information relating to one table in the data meaning candidate information is also referred to as "table data meaning candidate information."

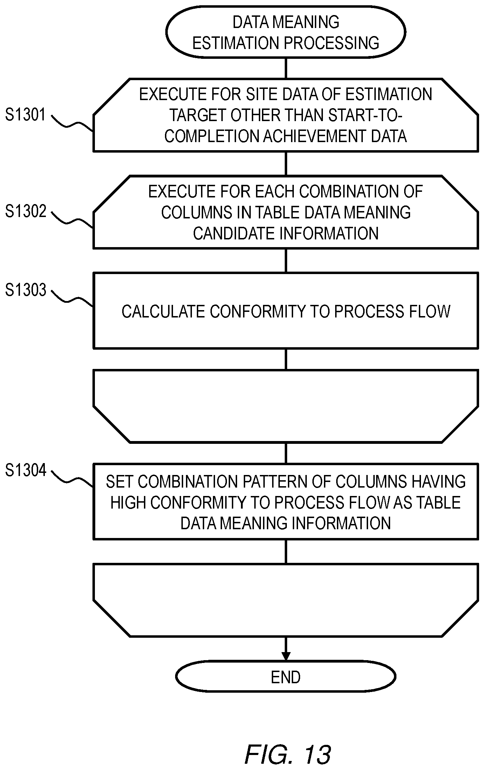

The data meaning setting module 240 estimates the data meaning from the data meaning candidate information based on the data meaning candidate information estimated by the data meaning candidate estimation module 230 and the process flow created by the process flow creation module 220 (S804). With reference to FIG. 13 and the like, details of the data meaning estimation processing in Step S804 are described later.

[Details of Process Flow Creation]

FIG. 9 is a flowchart for illustrating an example of the process flow creation processing in Step S802. The process flow creation module 220 executes processing steps of from Step S902 to Step S905 for each of all of the manufacturing target IDs included in the start-to-completion achievement data (S901). Specifically, the process flow creation module 220 repeats a sequence of processing of selecting one of unselected manufacturing target IDs out of the manufacturing target IDs included in the start-to-completion achievement data in Step S901, and executing the processing steps of from Step S902 to Step S905 for the selected manufacturing target ID until the sequence of processing is executed for all of the manufacturing target IDs.

The process flow creation module 220 acquires, from the start-to-completion achievement data, a record including the selected manufacturing target ID, that is, information indicating the task executed for the manufacturing target identified by the selected manufacturing target ID as a manufacturing start-to-completion achievement relating to this manufacturing target ID (S902).

The process flow creation module 220 uses the task time information as a key to rearrange the manufacturing start-to-completion achievements acquired in Step S902 immediately before the current processing (S903), and acquires the task IDs while the order thereof is maintained in the records indicated by the manufacturing start-to-completion achievements after the rearrangement, to thereby acquire a sequence of the task IDs (that is, information indicating the order of the tasks executed for the manufacturing target indicated by the manufacturing target ID) (S904).

The process flow creation module 220 disposes each of the task node distinguished by the task ID indicated by the sequence of the task IDs acquired in Step S904 immediately before the current processing in accordance with the order indicated by this sequence, and connects each task node via the material node (material is not distinguished regardless of the manufacturing target of the selected manufacturing target ID), to thereby create the process flow relating to the selected manufacturing target ID (S905).

The process flow creation module 220 creates a process flow obtained by unifying the process flows relating to all of the manufacturing target IDs included in the start-to-completion achievement data (S906), and finishes the process flow creation processing.

When each of the plurality of tables is set as the start-to-completion achievement data, the process flow creation module 220 executes, for example, for each of the plurality of tables, the processing steps of from Step S901 to Step S905, and unifies process flows relating to all of the manufacturing target IDs included in at least one of the plurality of tables in Step 906. In other words, even when a plurality of tables are set as the start-to-completion achievement data, as in the case in which one table is set as the start-to-completion achievement data, one unified process flow is created.

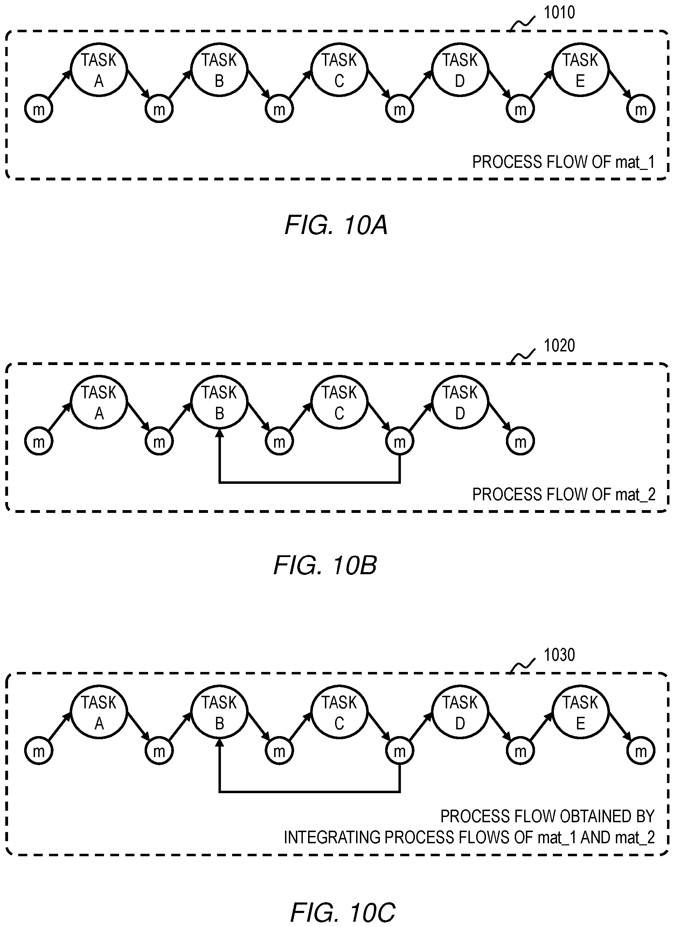

With reference to FIG. 10A, FIG. 10B, and FIG. 10C, description is given of the processing of unifying the process flows in Step S906. Each of FIG. 10A and FIG. 10B is a diagram for illustrating an example of the process flow before unification. FIG. 10C is a diagram for illustrating an example of the unified process flow.

FIG. 10A shows a process flow 1010 having "mat_1" as the manufacturing target ID. FIG. 10B shows a process flow 1020 having "mat_2" as the manufacturing target ID. The process flow creation module 220 has created the process flow 1010 and the process flow 1020 in the processing steps of from Step S901 to Step S905.

At this time, in Step S906, the process flow creation module 220 unifies the process flow 1010 and the process flow 1020 to create a process flow 1030. Specifically, for example, the process flow creation module 220 may create the unified process flow (here, the process flow 1030) including all edges (the edge is identified by a combination of the start point and the end point) and nodes of the process flows (here, the process flow 1010 and the process flow 1020) to be unified, or may create the unified process flow including edges and nodes included in process flows the number of which is equal to or more than a predetermined ratio of the number of the process flows to be unified. When the process flows to be unified include, for example, a plurality of process flows independent of one another (for example, a plurality of process flows which do not include common edges and nodes), each of the independent plurality of process flows is a sequence formed of the task nodes and the material nodes, but the nodes included in the sequence cannot be connected via edges in the creation of the unified process flow. As a result, the created unified process flow includes a plurality of sequences each formed of the task nodes and the material nodes and are not connected to one another via the edges.

[Details of Candidate Estimation]

FIG. 11 is a flowchart for illustrating an example of the data meaning candidate estimation processing in Step S803. The data meaning candidate estimation module 230 refers to the start-to-completion achievement data set by the data setting module 210 to use the data in the cells included in each column corresponding to the manufacturing target ID and the like to calculate a feature amount of the column corresponding to the manufacturing target ID, to use the data in the cells included in each column corresponding to the task ID and the like to calculate a feature amount of the column corresponding to the task ID, and to use the data in the cells included in each column corresponding to the task time information and the like to calculate a feature amount of the column corresponding to the task time information (S1101).

The data meaning candidate estimation module 230 uses, for example, at least one of a statistical amount such as an average value and/or a variance value of a character string length of the data included in the column of the feature amount calculation target, a data type of the data included in the column of the feature amount calculation target, a column name of the column of the feature amount calculation target, a table name including the column of the feature amount calculation target, or a value indicating a meaning, as a character string, of the data included in the column of the feature amount calculation target to calculate the feature amount.

It is desired that, in the calculation of the feature amount of the column corresponding to the manufacturing target ID, the feature amount of the column corresponding to the task ID, and the feature amount of the column corresponding to the task time information, the same algorithm for feature amount calculation be used.

The data meaning candidate estimation module 230 executes, for each of the one or more tables (that is, the tables of the data meaning estimation targets being the tables different from the start-to-completion achievement data) acquired by the data setting module 210 from the site data in accordance with the data meaning estimation instruction, processing steps of from Step S1103 to Step S1106 (S1102). Specifically, the data meaning candidate estimation module 230 repeats a sequence of processing of selecting one unselected table of the tables of the data meaning estimation targets in Step S1102, and executing processing steps of from Step S1102 to Step S1106 for this selected table until the sequence of processing is executed for all of the tables of the data meaning estimation targets.

The data meaning candidate estimation module 230 executes the processing steps of Step S1104 and Step S1105 for each of the columns included in the table selected in Step S1102 immediately before the current processing (S1103). Specifically, the data meaning candidate estimation module 230 repeats a sequence of processing of selecting, in Step S1103, one unselected column of the columns included in the table selected in Step S1102 immediately before the current processing, and executing the processing steps of Step S1104 and Step S1105 for this selected column until the sequence of processing is executed for all of the columns.

The data meaning candidate estimation module 230 uses the data in each cell of the column which is selected in Step S1103 immediately before the current processing and is included in the table selected in Step S1102 immediately before the current processing and the like to calculate the feature amount of this column in this table (S1104). The feature amount calculation algorithm in Step S1101 and a feature amount calculation algorithm in Step S1104 are the same.

The data meaning candidate estimation module 230 calculates a similarity to the feature amount of the column extracted in Step S1104 immediately before the current processing for each of the feature amount of the column corresponding to the manufacturing target ID, the feature amount of the column corresponding to the task ID, and the feature amount of the column corresponding to the task execution time of the start-to-completion achievement data calculated in Step S1101 (S1105).

For the calculation of the similarity between the feature amounts, a publicly-known method may be used. Specifically, for example, when the average value of the character string lengths of the data included in the column is calculated as the feature amount, the data meaning candidate estimation module 230 calculates the similarity based on a ratio between the average values of the character string lengths. The data meaning candidate estimation module 230 may use, for example, a machine learning method to calculate the similarity.

The data meaning candidate estimation module 230 identifies a column determined, based on a predetermined condition, to be high in at least one of the similarity to the column corresponding to the manufacturing target ID, the similarity to the column corresponding to the task ID, or the similarity to the column corresponding to the task execution time calculated in Step S1105 out of the columns of the selected table, and uses the identified column to create the table data meaning candidate information (S1106).

Specifically, the data meaning candidate estimation module 230 determines the column having, based on the predetermined condition, a high similarity to the column corresponding to the manufacturing target ID out of the columns in the selected table as a manufacturing target ID candidate in the table data meaning candidate information relating to this selected table. Further, the data meaning candidate estimation module 230 determines the column having, based on the predetermined condition, a high similarity to the column corresponding to the task ID as a task ID candidate in the table data meaning candidate information relating to this selected table. Further, the data meaning candidate estimation module 230 determines the column having, based on the predetermined condition, a high similarity to the column corresponding to the task execution time as a task execution time candidate in the table data meaning candidate information relating to this selected table.

When the similarity calculated in Step S1105 is determined as a quantitative numerical value, the data meaning candidate estimation module 230 determines that the similarity is high when the similarity is equal to or higher than a predetermined threshold value in Step S1106.

The data meaning candidate estimation module 230 creates data meaning candidate information including the table data meaning candidate information relating to each table estimated in Step S1106 (S1107), and finishes the data meaning candidate estimation processing.

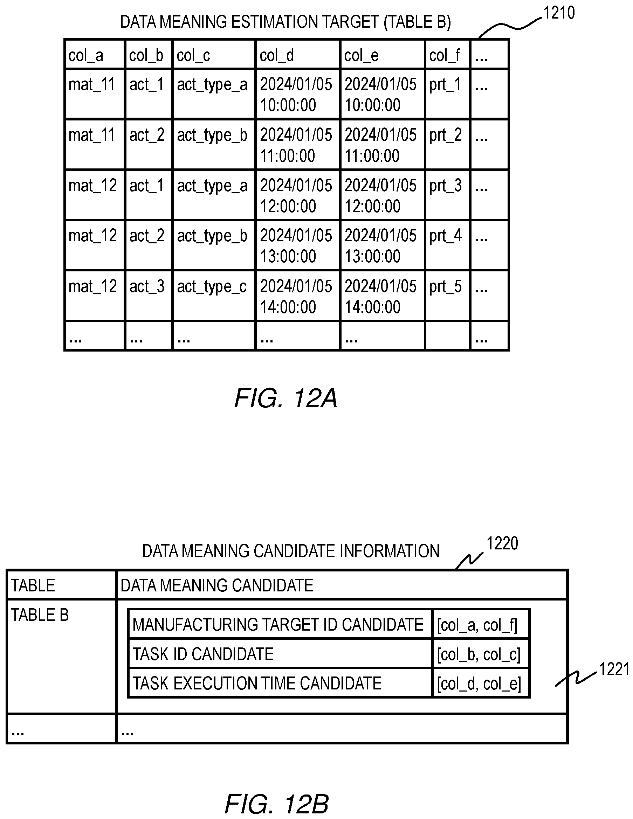

FIG. 12A is a table for showing a data configuration example of the table of the data meaning estimation target. A table 1210 is an example of the table (site data) of the data meaning estimation target, and it is assumed that a name thereof is "table B." The table 1210 includes col_a to col_f, each of which is a column.

FIG. 12B is a table for showing a data configuration example of the data meaning candidate information created in Step S1107. Data meaning candidate information 1220 indicates the table name of the data meaning estimation target, and the table data meaning candidate information relating to this table. For example, information stored in a cell 1221 in the data meaning candidate information 1220 of FIG. 12B is the table data meaning candidate information relating to "table B."

For example, it is assumed that "table A" (that is, the table 410 shown in FIG. 4A) of the site data is set as the start-to-completion achievement data, col1 of "table A" corresponds to the manufacturing target ID, col3 thereof corresponds to the task ID, and col5 thereof corresponds to the task execution time.

In this case, the example of the data meaning candidate information 1220 of FIG. 12B indicates that it is determined in Step S1206 that, in "table B" (that is, the table 1210 shown in FIG. 12A) being the data meaning estimation target, col_a and col_f are the manufacturing target ID candidates, col_b and col_c are the task ID candidates, and col_d and col_e are the task execution time candidates.

When the similarity is calculated as the quantitative numerical value in Step S1105, the data meaning candidate information 1220 may further hold information indicating the similarity corresponding to the column of the manufacturing target ID candidate, the similarity corresponding to the column of the task ID candidate, and the similarity corresponding to the column of the task execution time candidate.

One table of the data meaning estimation target may include a plurality of columns corresponding to any one of the manufacturing target ID candidate, the task ID candidate, and the task execution time candidate, one table of the data meaning estimation target may include none of columns corresponding to any one of the manufacturing target ID candidate, the task ID candidate, and the task execution time candidate, or one column of the table of the data meaning estimation target may correspond to two or more of the manufacturing target ID candidate, the task ID candidate, and the task execution time candidate.

[Final Determination]

FIG. 13 is a flowchart for illustrating an example of the data meaning estimation processing in Step S804. The data meaning setting module 240 executes, for each of the tables of the data meaning estimation targets, processing steps of from Step S1302 to Step S1304 (S1301). Specifically, the data meaning setting module 240 repeats a sequence of processing of selecting one unselected table of the tables of the data meaning estimation targets in Step S1301, and executing processing steps of from Step S1302 to Step S1304 for this selected table until the sequence of processing is executed for all of the tables of the data meaning estimation targets.

The table of the data meaning estimation target which includes only any one of the manufacturing target ID candidate, the task ID candidate, and the task execution time candidate and the table of the data meaning estimation target which includes none of the manufacturing target ID candidate, the task ID candidate, and the task execution time candidate are excluded from the target of the processing steps of from Step S1301 to Step S1304 (that is, such tables are not selected in Step S1301).

The data meaning setting module 240 identifies the table data meaning candidate information relating to the selected table of the data meaning estimation target from the data meaning candidate information 1220, generates all patterns of a combination possibly taken by the columns of the manufacturing target ID candidates, the task ID candidates, and the task execution time candidates based on the table data meaning candidate information, and executes the processing step of Step S1303 for each of the generated combinations (S1302). Specifically, the data meaning setting module 240 repeats a sequence of processing of selecting one unselected combination from the patterns of the combination generated in Step S1302, and executing the processing step of Step S1303 for this selected combination until the sequence of processing is executed for all patterns of the combination.

As described above, in the example of the data meaning candidate information 1220 of FIG. 12B, with reference to the table data meaning candidate information relating to "table B," col_a and col_f of "table B" are the manufacturing target **ID** candidates, col_b and col_c are the task ID candidates, and col_d and col_e are the task execution time candidates.

At this time, in Step S1302, the data meaning setting module 240 generates all patterns of a combination formed of the columns of the manufacturing target ID candidates, the columns of the task ID candidates, and the columns of the task execution time candidates from the table data meaning candidate information relating to "table B."

All patterns of the combination may include a combination in which the column of the manufacturing target ID candidate is not selected, may include a combination in which the column of the task ID candidate is not selected, and may include a combination in which the column of the task execution time candidate is not selected. It should be noted, however, that it is desired that at least two of the column of the manufacturing target ID candidate, the column of the task ID candidate, and the column of the task execution time candidate be selected in this combination, and it is assumed in the following that at least two thereof are selected.

Specifically, for example, all patterns of the combination of (manufacturing target ID candidate, task ID candidate, task execution time candidate) possibly taken for "table B" are (col_a, col_b, col_d), (col_a, col_b, col_e), (col_a, col_c, col_d), (col_a, col_c, col_e), (col_f, col_b, col_d), (col_f, col_b, col_e), (col_f, col_c, col_d), (col_f, col_c, col_e), (0, col_b, col_d), (0, col_b, col_e), (0, col_c, col_d), (0, col_c, col_e), (col_a, 0, col_d), (col_a, 0, col_e), (col_f, 0, col_d), (col_f, 0, col_e), (col_a, col_b, 0), (col_a, col_c, 0), (col_f, col_b, 0), and (col_f, col_c, 0). The value "0" included in the combination of (manufacturing target ID candidate, task ID candidate, task execution time candidate) indicates that the corresponding candidate column is not selected.

The data meaning setting module 240 assumes that the combination selected in Step S1302 immediately before the current processing is correct (that is, the columns of the manufacturing target ID candidate, the task ID candidate, and the task execution time candidate indicated by the selected combination correspond to the manufacturing target ID, the task ID, and the manufacturing execution time, respectively) for the selected table of the data meaning estimation target, and calculates a conformity between the selected table (site data) of the data meaning estimation target and the process flow created by the process flow creation module 220 under this assumption (S1303).

The data meaning setting module 240 sets, as the table data meaning information, information indicating the combination determined, based on a predetermined condition, to be high in conformity determined in Step S1303 in association with the information indicating the table of the data meaning estimation target (S1304), and finishes the data meaning estimation processing. In Step S1304, specifically, for example, the data meaning setting module 240 associates information indicating the combination having the highest conformity with the information indicating the table of the data meaning estimation target, but may finish the data meaning estimation processing without making this association when the highest conformity is equal to or lower than a predetermined value.

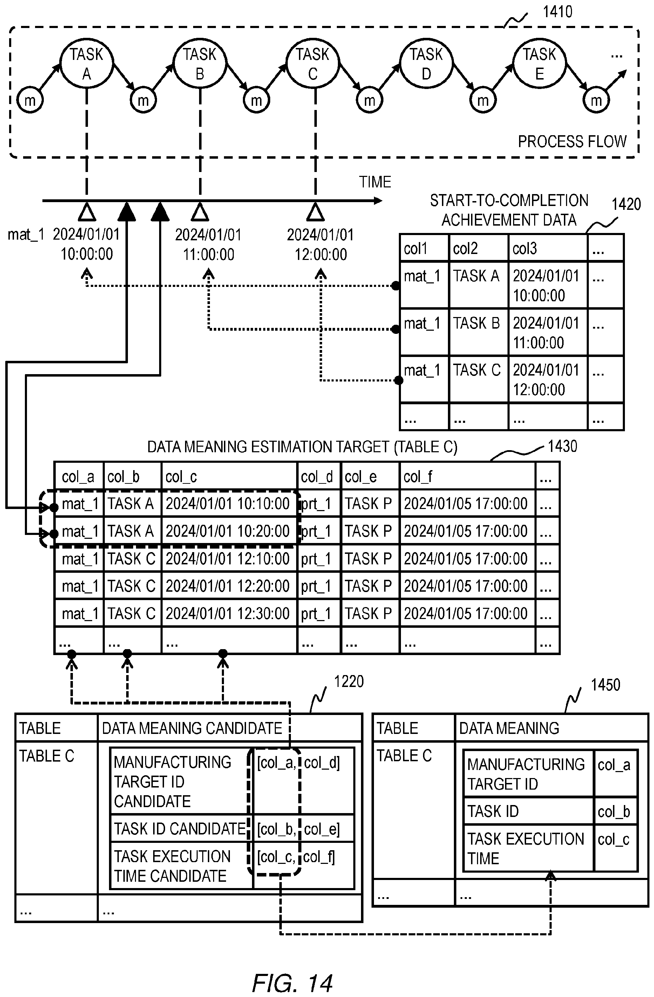

With reference to FIG. 14 to FIG. 17, description is now given of an example of processing of calculating the conformity to the process flow in Step S1303. In the example of FIG. 14 to FIG. 17, it is assumed that start-to-completion achievement data 1420 has been set by the data setting module 210, and a process flow 1410 has been created from the start-to-completion achievement data 1420 by the process flow creation module 220. It is assumed that, in the start-to-completion achievement data 1420, col_1 is set as the manufacturing target ID, col_2 is set as the task ID, and col_3 is set as the task execution time.

FIG. 14 is an explanatory diagram for illustrating an example of the processing of calculating the conformity to the process flow in Step S1303. A table 1430 is the site data of the data meaning estimation target (a name thereof is "table C"), and the table data meaning candidate information relating to "table C" is set in the data meaning candidate information 1220.

This table data meaning candidate information indicates that, in "table C," col_a and col_d are the manufacturing target ID candidates, col_b and col_e are the task ID candidates, and col_c and col_f are the task execution time candidates. It is assumed that (col_a, col_b, col_c) is currently selected by the data meaning setting module 240 in Step S1302 as the combination of (manufacturing target ID candidate, task ID candidate, task execution time candidate).

Under the above-mentioned assumption, the processing of calculating the conformity to the process flow 1410 is described. The data meaning setting module 240 compares the table 1430 in the case in which it is assumed that col_a is the manufacturing target ID, col_b is the task ID, and col_c is the task execution time with the start-to-completion achievement data 1420 (process flow 1410).

Specifically, for example, the data meaning setting module 240 determines, under this assumption, whether or not the combination of the manufacturing target ID, the task ID, and the task execution time indicated by each record of the table 1430 is consistent with the combination of the manufacturing target ID, the task ID, and the task execution time indicated by the start-to-completion achievement data 1420 and the process flow 1410.

In the example of FIG. 14, the first record of the table 1430 indicates such information that, for the manufacturing target distinguished by the manufacturing target ID of "mat_1," a task distinguished by a task ID of "task A" was executed at "2024/01/01 10:10:00." Further, the second record of the table 1430 indicates such information that, for the manufacturing target distinguished by the manufacturing target ID **of** "mat_1," the task distinguished by the task ID of "task A" was executed at "2024/01/01 10:20:00."

The first record of the start-to-completion achievement data 1420 indicates such information that, for the manufacturing target distinguished by the manufacturing target ID of "mat_1," the task distinguished by the task ID of "task A" was executed at "2024/01/01 10:00:00." In the process flow 1410, it is indicated that "task B" is a following task of "task A," and further, the second record of the start-to-completion achievement data 1420 indicates such information that, for the manufacturing target distinguished by the manufacturing target ID of "mat_1," the task distinguished by the task ID of "task B" (following task of "task A" as described above) was executed at "2024/01/01 11:00:00." In other words, it is indicated by the start-to-completion achievement data 1420 and the process flow 1410 that "task A" for "mat_1" can be executed after "2024/01/01 10:00:00" and before "2024/01/01 11:00:00" (the time at which the following task is executed).

Thus, both of the above-mentioned information indicated by the first record of the table 1430 and the above-mentioned information indicated by the second record thereof are consistent with the start-to-completion achievement data 1420 and the process flow 1410. The conformity to the process flow 1410, details of which are described later, is calculated based on, for example, a ratio of the number of records consistent with the start-to-completion achievement data 1420 (process flow 1410) to all records of the table 1430. As the ratio becomes higher, the conformity becomes higher.

In the example of FIG. 14, it is assumed that the data meaning setting module 240 determines that the conformity to the process flow 1410 is the highest when (col_a, col_b, col_c) is selected as the combination of (manufacturing target ID candidate, task ID candidate, task execution time candidate) in Step S1302. At this time, the data meaning setting module 240 estimates the table data meaning information relating to "table C" in accordance with this combination (that is, generates information indicating that, in "table C," col_a corresponds to the manufacturing target ID, col_b corresponds to the task ID, and col_c corresponds to the task execution time), and stores this information in the data meaning information 1450.

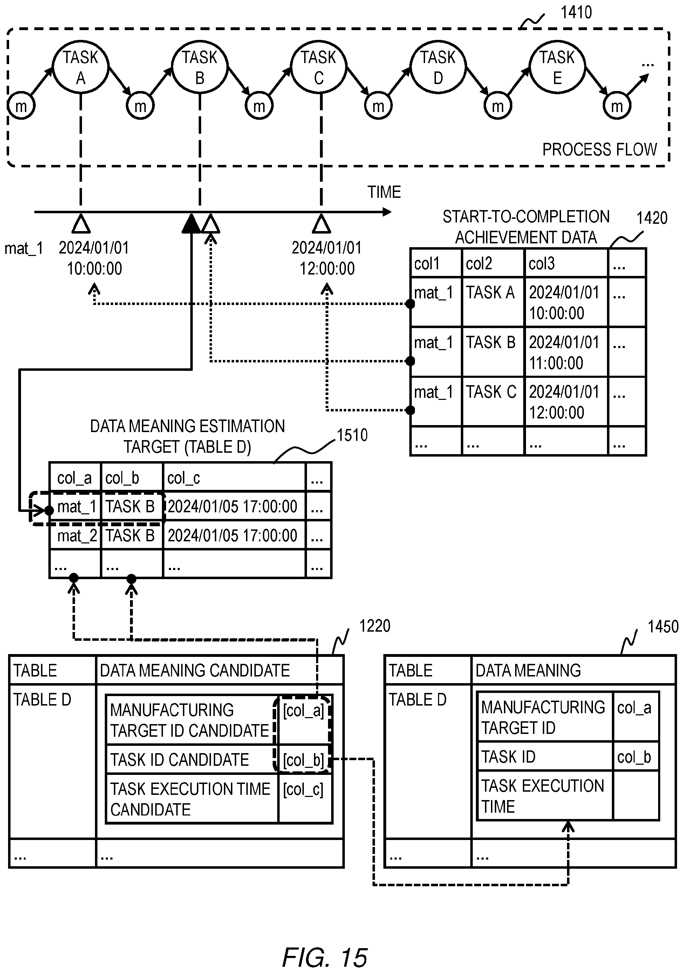

FIG. 15 is an explanatory diagram for illustrating an example of the processing of calculating the conformity to the process flow in Step S1303. A table 1510 is the site data of the data meaning estimation target (a name thereof is "table D"), and the table data meaning candidate information relating to "table D" is set in the data meaning candidate information 1220.

This table data meaning candidate information indicates that, in "table D," col_a is the manufacturing target ID candidate, col_b is the task ID candidate, and col_c is the task execution time candidate. It is assumed that (col_a, col_b, 0) is currently selected (that is, in this combination, only the column of the task execution time candidate is not selected) by the data meaning setting module 240 as the combination of (manufacturing target ID candidate, task ID candidate, task execution time candidate) in Step S1302.

Under the above-mentioned assumption, the processing of calculating the conformity to the process flow 1410 is described. The data meaning setting module 240 compares the table 1510 in the case in which it is assumed that col_a is the manufacturing target ID and col_b is the task ID with the start-to-completion achievement data 1420.

Specifically, for example, the data meaning setting module 240 determines, under this assumption, whether or not the combination of the manufacturing target ID and the task execution time indicated by each record of the table 1510 is consistent with the combination of the manufacturing target ID and the task execution time, respectively, indicated by the start-to-completion achievement data 1420 and the process flow 1410. In other words, the column of the task execution time candidate is not selected in the combination currently selected in Step S1302, and hence the task execution time is not considered in the determination of the consistency.

In the example of FIG. 15, the task execution time is not considered in the determination of the consistency, and hence the first record of a table 1510 indicates such information that, for the manufacturing target distinguished by the manufacturing target ID of "mat_1," the task distinguished by the task ID of "task B" was executed. This information is consistent with the information which is indicated by the second record of the start-to-completion achievement data 1420, and indicates that, for the manufacturing target distinguished by the manufacturing target ID of "mat_1," the task distinguished by the task ID "task B" was executed.

In the example of FIG. 15, it is assumed that the data meaning setting module 240 selects, in Step S1302, (col_a, col_b, col_c) as the combination of (manufacturing target ID candidate, task ID candidate, task execution time candidate). In this case, the first record of the table 1510 indicates such information that, for the manufacturing target distinguished by the manufacturing target ID of "mat_1," the task distinguished by the task ID of "task B" was executed at "2024/01/05 17:00:00."

However, the second record of the start-to-completion achievement data 1420 indicates that "task C" (following task of "task B" in the process flow 1410) executed for "mat_1" starts at "2024/01/01 11:00:00," and hence the first record of the table 1510 indicating that "task B" for "mat_1" started at "2024/01/05 17:00:00" being a timing after the start of the following task "task C" of "task B" is not consistent with the start-to-completion achievement data 1420 (process flow 1410).

As described above, in the combination of (manufacturing target ID candidate, task ID candidate, task execution time candidate), the ratio of the number of records which are consistent with the start-to-completion achievement data 1420 (process flow 1410) to, for example, all of the records of the table 1510 is more likely to be higher in the case in which only two of the column of the manufacturing target ID candidate, the column of the task ID candidate, and the column of the task execution time candidate are selected than in the case in which the column of the manufacturing target ID candidate, the column of the task ID candidate, and the column of the task execution time candidate are selected.

However, as the number of the selected columns of the column of the manufacturing target ID candidate, the column of the task ID candidate, and the column of the task execution time candidate becomes larger, the record of the table of the data meaning estimation target is less possibly consistent with the start-to-completion achievement data 1420 (process flow 1410), but, when the record is consistent, it is considered that the combination is more likely to be correct. Thus, it is desired that the conformity to the process flow 1410 have, for example, a larger value as the number of selected columns of the column of the manufacturing target ID candidate, the column of the task ID candidate, and the column of the task execution time candidate has a larger value, and this conformity have a larger value as this ratio becomes higher.

In the example of FIG. 15, it is assumed that the data meaning setting module 240 determines that the conformity to the process flow 1410 is the highest when (col_a, col_b, 0) is selected as the combination of (manufacturing target ID candidate, task ID candidate, task execution time candidate) in Step S1302. At this time, the data meaning setting module 240 estimates the table data meaning information relating to "table D" in accordance with this combination (that is, generates information indicating that, in "table D," col_a corresponds to the manufacturing target ID, col_b corresponds to the task ID, and there is no column which corresponds to the task execution time), and stores this information in the data meaning information 1450.

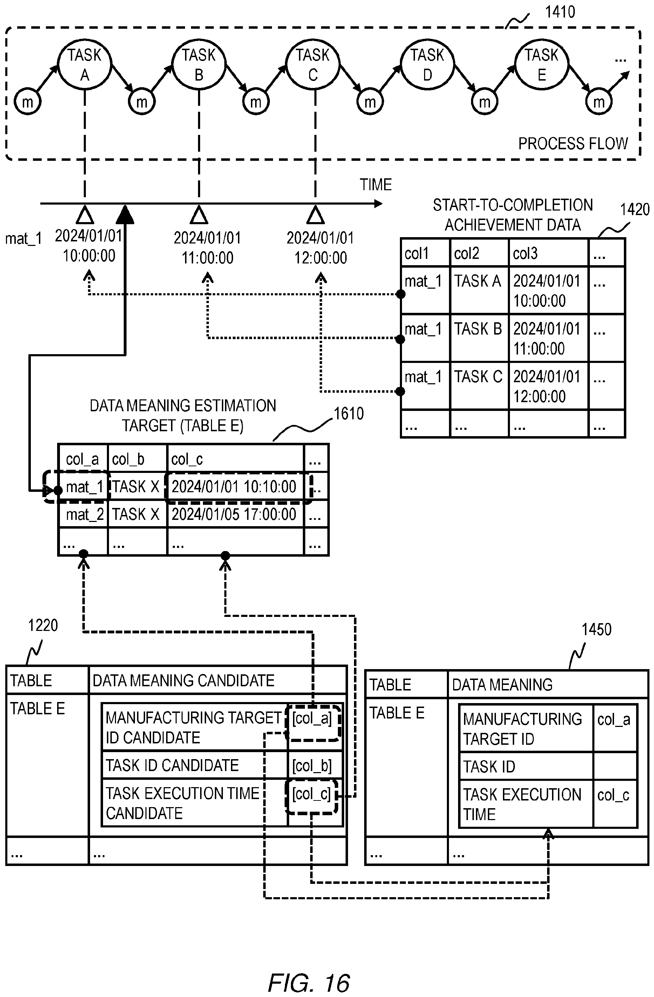

FIG. 16 is an explanatory diagram for illustrating an example of the processing of calculating the conformity to the process flow in Step S1303. A table 1610 is the site data of the data meaning estimation target (a name thereof is "table E"), and the table data meaning candidate information relating to "table E" is set in the data meaning candidate information 1220.

This table data meaning candidate information indicates that, in "table E," col_a is the manufacturing target ID candidate, col_b is the task ID candidate, and col_c is the task execution time candidate. It is assumed that (col_a, 0, col_c) is currently selected (that is, in this combination, only the column of the task ID candidate is not selected) by the data meaning setting module 240 as the combination of (manufacturing target ID candidate, task ID candidate, task execution time candidate) in Step S1302.

Under the above-mentioned assumption, the calculation processing for the conformity to the process flow 1410 is now described. The data meaning setting module 240 compares the table 1610 in the case in which it is assumed that col_a is the manufacturing target ID and col_c is the task execution time with the start-to-completion achievement data 1420.

Specifically, for example, the data meaning setting module 240 determines, under this assumption, whether or not the combination of the manufacturing target ID and the task ID indicated by each record of the table 1610 is consistent with the combination of the manufacturing target ID and the task ID, respectively, indicated by the start-to-completion achievement data 1420 and the process flow 1410. In other words, the column of the task ID is not selected in the combination currently selected in Step S1302, and hence the task ID is not considered in the determination of the consistency.

In the example of FIG. 16, the task ID is not considered in the determination of the consistency, and hence the first record of the table 1610 indicates such information that a certain task was executed at "2024/01/01 10:10:00" for the manufacturing target distinguished by the manufacturing target ID of "mat_1."

The first record of the start-to-completion achievement data 1420 indicates such information that a certain task was executed at "2024/01/01 10:00:00" for the manufacturing target distinguished by the manufacturing target ID of "mat_1." The second record of the start-to-completion achievement data 1420 indicates such information that a certain task was executed at "2024/01/01 11:00:00" for the manufacturing target distinguished by the manufacturing target ID of "mat_1." In other words, it is indicated that "task A" for "mat_1" can be executed after "2024/01/01 10:00:00" and before "2024/01/01 11:00:00." Thus, the above-mentioned information indicated by the first record of the table 1610 is consistent with the start-to-completion achievement data 1420.

In the example of FIG. 16, it is assumed that the data meaning setting module 240 selects, in Step S1302, (col_a, col_b, col_c) as the combination of (manufacturing target ID candidate, task ID candidate, task execution time candidate). In this case, the first record of the table 1610 indicates such information that, for the manufacturing target distinguished by the manufacturing target ID of "mat_1," the task distinguished by the task ID of "task X" was executed at "2024/01/01 11:00:00."

However, this information is not consistent with the information indicated by the first record of the start-to-completion achievement data 1420 and indicating that, for the manufacturing target distinguished by the manufacturing target ID of "mat_1," the task distinguished by the task ID of "task A" was executed at "2024/01/01 10:00:00" and the information indicated by the second record of the start-to-completion achievement data 1420 and indicating that, for the manufacturing target distinguished by the manufacturing target ID of "mat_1," the task distinguished by the task ID of "task B" (following task of "task A" in the process flow 1410) was executed at "2024/01/01 11:00:00" (that is, the task is not consistent).

In the example of FIG. 16, it is assumed that the data meaning setting module 240 determines that the conformity to the process flow 1410 is the highest when (col_a, 0, col_c) is selected as the combination of (manufacturing target ID candidate, task ID candidate, task execution time candidate) in Step S1302. At this time, the data meaning setting module 240 estimates the table data meaning information relating to "table E" in accordance with this combination (that is, generates information indicating that, in "table E," col_a corresponds to the manufacturing target ID, there is no column which corresponds to the task ID, and col_c corresponds to the task execution time), and stores this information in the data meaning information 1450.

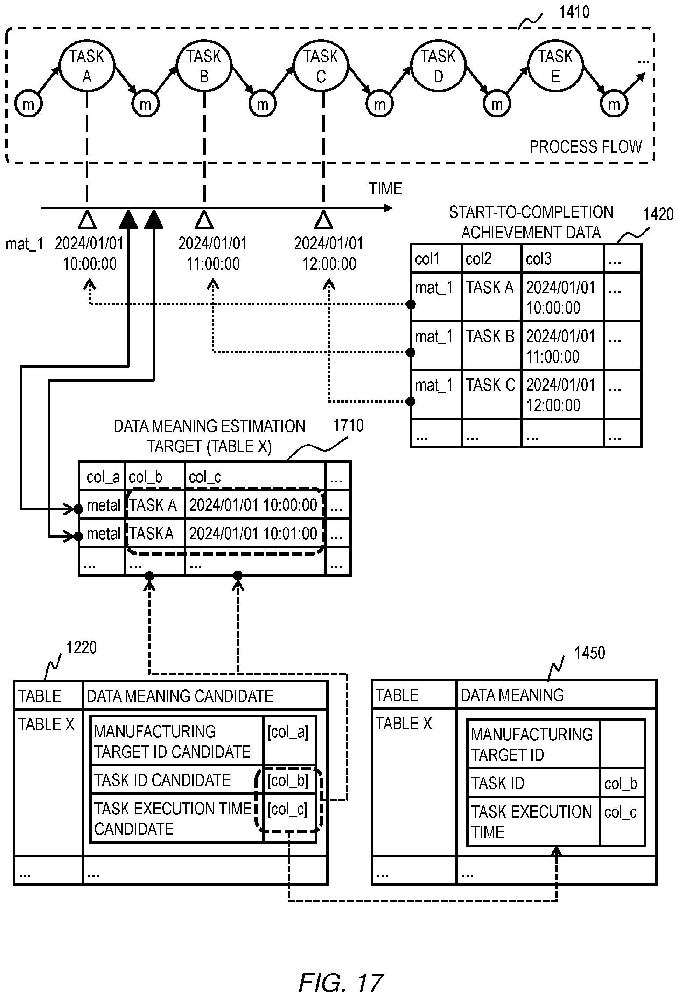

FIG. 17 is an explanatory diagram for illustrating an example of the processing of calculating the conformity to the process flow in Step S1303. A table 1710 is the site data of the data meaning estimation target (a name thereof is "table X"), and the table data meaning candidate information relating to "table X" is set in the data meaning candidate information 1220.

This table data meaning candidate information indicates that, in "table X," col_a is the manufacturing target ID candidate, col_b is the task ID candidate, and col_c is the task execution time candidate. It is assumed that (0, col_b, col_c) is currently selected (that is, in this combination, only the column of the manufacturing target ID candidate is not selected) by the data meaning setting module 240 as the combination of (manufacturing target **ID** candidate, task ID candidate, task execution time candidate) in Step S1302.

Under the above-mentioned assumption, the processing of calculating the conformity to the process flow 1410 is now described. The data meaning setting module 240 compares the table 1710 in the case in which it is assumed that col_b is the task ID and col_c is the task execution time with the start-to-completion achievement data 1420.

Specifically, for example, the data meaning setting module 240 determines, under this assumption, whether or not the combination of the task ID and the task execution time indicated by each record of the table 1710 is consistent with the combination of the task ID and the task execution time, respectively, indicated by the start-to-completion achievement data 1420 and the process flow 1410. In other words, the column of the manufacturing target ID is not selected in the combination currently selected in Step S1302, and hence the manufacturing target ID is not considered in the determination of the consistency.

In the example of FIG. 17, the manufacturing target ID is not considered in the determination of the consistency.

Thus, the first record of the table 1710 indicates such information that the task distinguished by the task ID of "task A" was executed at "2024/01/01 10:00:00," and the second record of the table 1710 indicates such information that the task distinguished by the task ID of "task A" was executed for the manufacturing target at "2024/01/01 10:01:00."

The first record of the start-to-completion achievement data 1420 indicates such information that the task distinguished by the task ID of "task A" was executed at "2024/01/01 10:00:00." In the process flow 1410, it is indicated that "task B" is a following task of "task A," and further, the second record of the start-to-completion achievement data 1420 indicates such information that the task distinguished by the task ID of "task B" (following task of "task A" as described above) was executed at "2024/01/01 11:00:00." In other words, it is indicated by the start-to-completion achievement data 1420 and the process flow 1410 that "task A" can be executed after "2024/01/01 10:00:00" and before "2024/01/01 11:00:00" (the time at which the following task is executed).

Thus, both of the above-mentioned information indicated by the first record of the table 1710 and the above-mentioned information indicated by the second record thereof are consistent with the start-to-completion achievement data 1420 and the process flow 1410.

In the example of FIG. 17, it is assumed that the data meaning setting module 240 selects, in Step S1302, (col_a, col_b, col_c) as the combination of (manufacturing target ID candidate, task ID candidate, task execution time candidate). In this case, the first record of the table 1710 indicates such information that, for a manufacturing target distinguished by the manufacturing target ID of "metal," the task distinguished by the task ID of "task A" was executed at "2024/01/01 10:00:00," and the second record of the table 1710 indicates such information that, for the manufacturing target distinguished by the manufacturing target ID of "metal," the task distinguished by the task ID of "task A" was executed at "2024/01/01 10:01:00."

However, this information is not consistent with the information indicated by the first record of the start-to-completion achievement data 1420 and indicating that, for the manufacturing target distinguished by the manufacturing target ID of "mat_1," the task distinguished by the task ID of "task A" was executed at "2024/01/01 10:00:00" and the information indicated by the second record of the start-to-completion achievement data 1420 and indicating that, for the manufacturing target distinguished by the manufacturing target ID of "mat_1," the task distinguished by the task ID of "task B" (following task of "task A" in the process flow 1410) was executed at "2024/01/01 11:00:00" (the task is not consistent).

In the example of FIG. 17, it is assumed that the data meaning setting module 240 determines that the conformity to the process flow 1410 is the highest when (0, col_b, col_c) is selected as the combination of (manufacturing target ID candidate, task ID candidate, task execution time candidate) in Step S1302. At this time, the data meaning setting module 240 estimates the table data meaning information relating to "table X" in accordance with this combination (that is, generates information indicating that, in "table X," there is no column which corresponds to the manufacturing target ID, col_b corresponds to the task ID, and col_c corresponds to the task execution time), and stores this information in the data meaning information 1450.

Description is now given of a specific example of the method of calculating the conformity to the process flow as a quantitative value. The data meaning setting module 240 may use, for example, (Expression 1) given below to calculate the conformity to the process flow as a quantitative value.

$$L_{i\_t,i\_a,i\_p}=S_{i\_t,i\_a,i\_p}*w_{i\_t,i\_a,i\_p} \ldots \quad \text{(Expression 1)}$$

In (Expression 1), L indicates the conformity to the process flow, S indicates a score, and w indicates a weight for the score. Moreover, "i" indicates a column selected from the data meaning candidate. Further, $i\_t$, $i\_a$, and $i\_p$ (where "_" indicates a subscript) indicate the column of the task execution time candidate, the column of the task ID candidate, and the column of the manufacturing target ID candidate, respectively, selected from the table of the data meaning estimation target.

In other words, $L_{i\_t,i\_a,i\_p}$ indicates the conformity to the process flow in the column combination pattern selected in Step S1302, $S_{i\_t,i\_a,i\_p}$ indicates the score given based on the consistency with the process flow in this column combination pattern, and $w_{i\_t,i\_a,i\_p}$ indicates the weight by which the score given based on the consistency with the process flow in the column combination pattern is multiplied. $i\_t$=0, $i\_a$=0, and $i\_p$=0 indicate that the column of the task execution time candidate is not selected, the column of the task ID candidate is not selected, and the column of the manufacturing target ID candidate is not selected, respectively.

In the example of the calculation of the conformity of FIG. 14, (col_a, col_b, col_c) is selected as the combination of (manufacturing target ID candidate, task ID candidate, task execution time candidate) from "table C" of the data meaning estimation target, and hence $i\_t$=col_c, $i\_a$=col_b, and $i\_p$=col_a. Further, in the example of the calculation of the conformity of FIG. 15, (col_a, col_b, 0) is selected as the combination of (manufacturing target ID candidate, task ID candidate, task execution time candidate) from "table D" of the data meaning estimation target, and hence $i\_t$=0, $i\_a$=col_b, and $i\_p$=col_a.

$S_{i\_t,i\_a,i\_p}$ is a value which varies depending on, for example, whether or not each of $i\_t$, $i\_a$, and $i\_p$ is 0, and a value defined in advance. For example, in a case in which when none of $i\_t$, $i\_a$, and $i\_p$ is 0, $S_{i\_t,i\_a,i\_p}$ is S1, when $i\_a$ is 0, and $i\_t$ and $i\_p$ are not 0, $S_{i\_t,i\_a,i\_p}$ is S2, when $i\_p$ is 0, and $i\_a$ and $i\_t$ are not 0, $S_{i\_t,i\_a,i\_p}$ is S3, when $i\_t$ is 0, and $i\_a$ and $i\_p$ are not 0, $S_{i\_t,i\_a,i\_p}$ is S4, setting is made such that S1>S2>S3>S4. It is desired that S1 be larger than any one of S2, S3, and S4, but a magnitude relationship among S2, S3, and S4 may be freely set, and at least some of S2, S3, and S4 have the same value.

$w_{i\_t,i\_a,i\_p}$ is, for example, a ratio of the number of the records consistent with the start-to-completion achievement data (process flow) to all of the records in the table of the data meaning estimation target under the condition that $i\_t$, $i\_a$, and $i\_p$ are selected. As described above, the columns corresponding to the variables having the value of 0 out of $i\_t$, $i\_a$, and $i\_p$ are not considered for this determination of the consistency.

In the example of FIG. 14, even when $i\_t$=col_c, $i\_a$=col_b, and $i\_p$=col_a (that is, none is 0), the records included in "table C" of the data meaning estimation target are consistent with the start-to-completion achievement data 1420, hence $w_{i\_t,i\_a,i\_p}$ has a large value, and the high score S1 is defined as $S_{i\_t,i\_a,i\_p}$ in this case. Thus, the conformity has a high value in the combination of $i\_t$=col_c, $i\_a$=col_b, and $i\_p$=col_a.

In the example of FIG. 15, when $i\_t$=col_c, $i\_a$=col_b, and $i\_p$=col_a, $S_{i\_t,i\_a,i\_p}$ is S1 and hence is a high score, but the records included in "table D" of the data meaning estimation target are not consistent with the start-to-completion achievement data 1420, and hence $w_{i\_t,i\_a,i\_p}$ has a small value. Meanwhile, in the example of FIG. 15, when $i\_t$=0, $i\_a$=col_b, and $i\_p$=col_a, $S_{i\_t,i\_a,i\_p}$ is S4 and hence is a low score, but the records included in "table D" of the data meaning estimation target are consistent with the start-to-completion achievement data 1420, and hence $w_{i\_t,i\_a,i\_p}$ has a large value. In this case, the combination of $i\_t$=0, $i\_a$=col_b, and $i\_p$=col_a sometimes has a larger value of the conformity than that of the combination of $i\_t$=col_c, $i\_a$=col_b, and $i\_p$=col_a.

In a case in which the similarity of each column is recorded as a quantitative value in the data meaning candidate information 1220 when the data meaning candidate estimation module 230 creates the data meaning candidate information 1220, this quantitative value may additionally be considered for the determination of the conformity to the process flow. For example, a variable x may be set as a quantitative value of the similarity to the data meaning, a function "f" may be set as a function for considering the quantitative value (for example, "f" is set as an increasing function of x), and a value obtained by adding the value of the function "f" to which the variable x is assigned to the variable L may be set as the conformity.

As the examples are illustrated in FIG. 14 to FIG. 17, the data meaning setting module 240 calculates the conformity to the process flow for each combination of the columns which is the table data meaning candidate information for the table of the site data which is the table data meaning estimation target, to thereby set the combination pattern of the columns determined to have a conformity highest (and equal to or higher than the predetermined value) as the table data meaning information in this table.

[Screen Display]

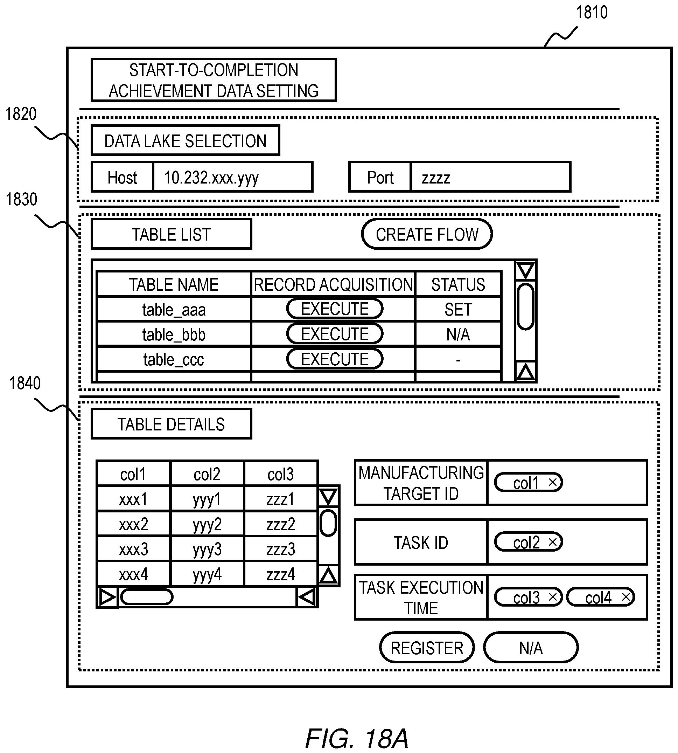

FIG. 18A is a view for illustrating a screen configuration example of a start-to-completion achievement data setting screen. A start-to-completion achievement data setting screen 1810 is displayed in Step S801 on, for example, the operation terminal 160 in order to receive the settings relating to the start-to-completion achievement data from the user.

The start-to-completion achievement data setting screen 1810 includes an area 1820 for receiving settings for information on access to the site data accumulation module 140, an area 1830 for displaying a list of the site data stored in the site data accumulation module 140, and an area 1840 for displaying details of the site data selected from the site data list displayed in the area 1830.

The area 1820 is an area for receiving, for example, settings for host information of the site data accumulation module 140 and port information for accessing a database.

In the area 1830, for example, the list of the site data stored in the site data accumulation module 140 and information indicating whether or not each piece of the displayed site data is set as the start-to-completion achievement data are displayed. The area 1830 includes an interface for displaying the details of the table selected from this list in the area 1840. The area 1830 includes an interface for receiving, when the setting for the start-to-completion achievement data has been completed, the instruction to create the process flow from the set start-to-completion achievement data.

In the area 1840, the details of the table selected in the area 1830 are displayed. In the area 1840, for example, a list of the columns of the table and actual records are displayed. The area 1840 includes an interface for receiving such settings that which columns are the manufacturing target IDs, which columns are the task IDs, and which columns are the task execution times when the displayed table is to be set as the start-to-completion achievement data. The area 1840 includes, for example, an interface for reflecting the column setting by the user and an interface for receiving such a setting that the displayed table is not the start-to-completion achievement data.

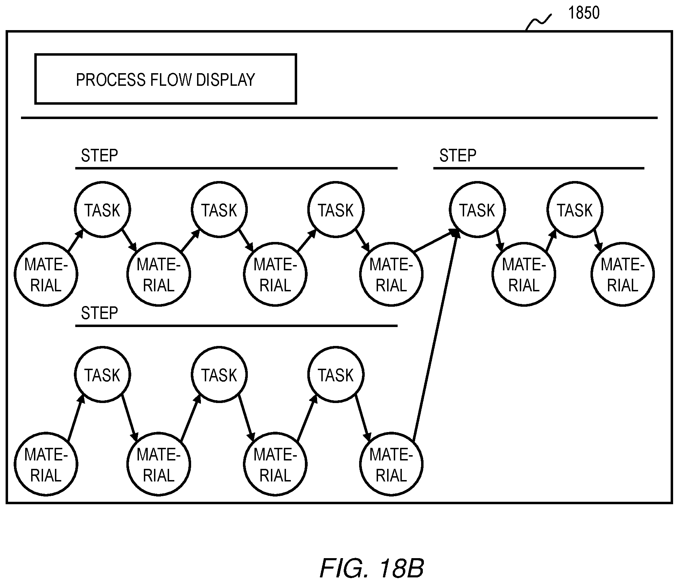

FIG. 18B is a view for illustrating a screen configuration example of a process flow display screen. A process flow display screen 1850 displays the process flow created in Step S802 from the start-to-completion achievement data set in Step S801.

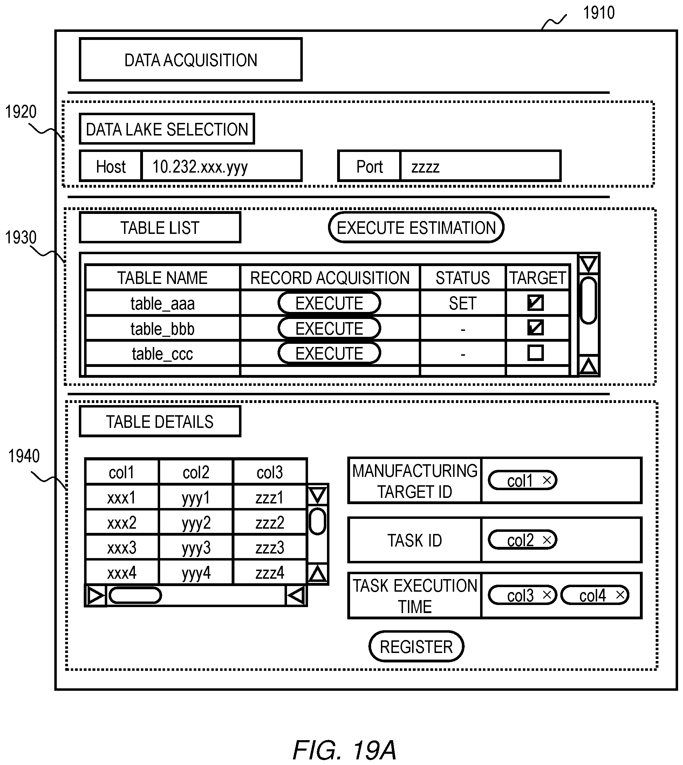

FIG. 19A is a view for illustrating a screen configuration example of a data meaning estimation target setting screen. A data meaning estimation target setting screen 1910 is displayed in Step S803 on, for example, the operation terminal 160 in order to receive, from the user, the settings relating to the site data being the estimation target for the data meaning information.

The data meaning estimation target setting screen 1910 includes, for example, an area 1920 for receiving settings for information on access to the site data accumulation module 140, an area 1930 for displaying a list of the site data stored in the site data accumulation module 140, and an area 1940 for displaying details of the site data selected from the site data list displayed in the area 1930.

The area 1920 is an area for receiving, for example, settings for host information of the site data accumulation module 140 and port information for accessing a database.

In the area 1930, for example, the list of the site data stored in the site data accumulation module 140 and the information indicating whether or not each piece of the displayed site data is set as the estimation target for the data meaning information are displayed. The area 1930 includes an interface for displaying the details of the table selected from this list in the area 1940. The area 1930 includes an interface for receiving an instruction to estimate the data meaning information for the site data set as the estimation target for the data meaning information.

In the area 1940, the details of the table selected in the area 1930 are displayed. In the area 1940, for example, a list of the columns of the table and actual records are displayed. The area 1940 may include an interface for receiving, for the table set as the data meaning estimation target, when at least one of the columns corresponding to the manufacturing target IDs, the columns corresponding to the task IDs, or the columns corresponding to the task execution times is known, a setting for this at least one. The area 1940 may include an interface for reflecting the column setting by the user.

The table in which at least one of the columns corresponding to the manufacturing target IDs, the columns corresponding to the task IDs, or the columns corresponding to the task execution times is set may be excluded from the target of the estimation for the data meaning information (that is, the meaning of this at least one is treated as correct). The set information may be used as training data and other data may be used for a machine learning method at the time of estimation of the table data meaning candidate information in the data being the target of the estimation for the meaning information.

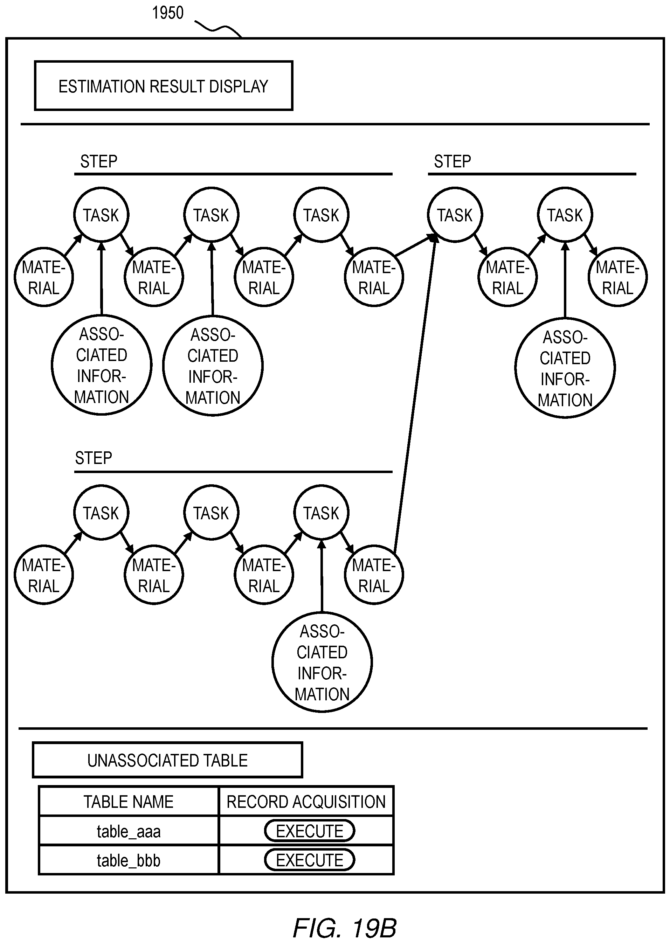

FIG. 19B is a view for illustrating a screen configuration example of a data meaning estimation result display screen. A data meaning estimation result display screen 1950 is a screen for displaying an estimation result in the data meaning estimation processing in Step S804, and is displayed on, for example, the operation terminal 160.

On the data meaning estimation result display screen 1950, for example, an estimation result of the data meaning information in each piece of the site data being the estimation target of the data meaning information is displayed. For example, the data meaning setting module 240 provides the estimation result of the data meaning information to the process model creation module 250, and the process model creation module 250 uses the estimation result of the data meaning information to create the process model.

In this case, on the data meaning estimation result display screen 1950, this process model may be displayed. In the process model, the site data (including the table having been the data meaning estimation target) is associated with the node of the task-associated information connected to the task node, and the above-mentioned estimation result of the data meaning information is used for this association of this site data. On the data meaning estimation result display screen 1950, information indicating the site data which has failed in the association with the process model as a result of the estimation of the data meaning information may be displayed.

As described above, the process model creation system 110 in the first embodiment compares the column feature amount of the table of the data meaning estimation target and the feature amount of the column of the start-to-completion achievement data with each other to generate the data meaning candidate information, thereby being able to highly accurately narrow down the data meaning candidates with a small calculation amount.

The process model creation system 110 in the first embodiment selects the combination of the columns from the data meaning candidate information, and calculates the conformity based on the consistency between the table of the data meaning estimation target in the case in which the data meaning indicated by this combination is assumed to be correct and the start-to-completion achievement data and the process flow created from the start-to-completion achievement data, thereby being able to highly accurately estimate the data meaning with a small calculation amount.

When the user executes the input relating to the settings of the start-to-completion achievement data and the table of the data meaning estimation target, the process model creation system 110 can estimate the data meaning of the table of the data meaning estimation target, and hence the load of work on the user is also low.

[Second Embodiment]

In a second embodiment of this invention, description is given of an example of processing of estimating, by the data meaning setting module 240, the meaning of the table from the table data meaning candidate information. Description of points similar to the first embodiment is appropriately omitted in the following.

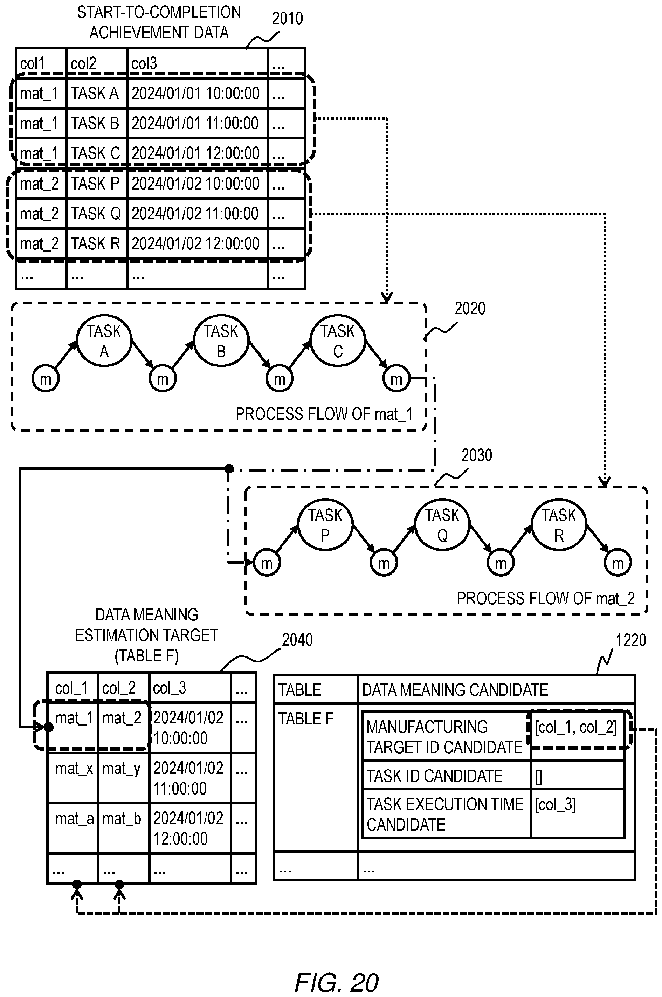

FIG. 20 is an explanatory diagram for illustrating an example of processing of estimating the meaning of the table from the table data meaning candidate information. In the example of FIG. 20, it is assumed that start-to-completion achievement data 2010 is set by the data setting module 210, and a process flow 2020 and a process flow 2030 are created from the start-to-completion achievement data 2010 by the process flow creation module 220. It is assumed that, in the start-to-completion achievement data 2010, col_1 is set as the manufacturing target ID, col_2 is set as the task ID, and col_3 is set as the task execution time.

A table 2040 is the site data of the data meaning estimation target (a name thereof is "table F"), and the table data meaning candidate information relating to "table F" is set in the data meaning candidate information 1220.

This table data meaning candidate information indicates that, in "table F," col_1 and col_2 are the manufacturing target ID candidates, the task ID candidate does not exist, and col_3 is the task execution time candidate. In the second embodiment, when the combination formed of the column of the manufacturing target ID candidate, the column of the task ID candidate, and the column of the task execution time candidate is selected in Step S1302, regarding the manufacturing target ID candidate, two columns of the manufacturing target ID candidates can be selected. One of the two columns of the manufacturing target ID candidates can be selected as the column of the manufacturing target ID candidate of a component to be input, and the other column can be selected as the column of the manufacturing target ID candidate of a product to be produced from this component.

Here, for example, the data meaning setting module 240 may estimate, when the data in each of the two columns selected from the manufacturing target ID candidates in "table F" (table 2040) is confirmed to exist in the data of col1 corresponding to the manufacturing target ID in the start-to-completion achievement data 2010, that "table F" is component input achievement data. Here, the component input achievement data indicates an achievement of input material (input component) used when the task was executed for the manufacturing target in the manufacturing process.

In the example of FIG. 20, it is determined, from the start-to-completion achievement data 2010, that each of the task execution times for "mat_1" of "task A," "task B," and "task C" included in a process flow 2020 corresponding to "mat_1" indicated by a cell of col_1 in the first record of "table F" is older than the task execution time for "mat_2" of each of "task P," "task Q," and "task R" forming a process flow 2030 corresponding to "mat_2" indicated by a cell of col_2 in the second record of "table F." At this time, it may be estimated that, when the task was executed for "mat_2" being a product, "mat_1" being the component was used as the input material.

The data meaning setting module 240 may provide, to the process model creation module 250, information indicating the estimated component input achievement data together with the data meaning information. The process model creation module 250 may use the provided component input achievement data to create the process model. The process model creation system 110 may display information on the process model including the information on the component input achievement data on the data meaning estimation result display screen 1950.

[Third Embodiment]

In a third embodiment of this invention, description is given of an example of processing of estimating, by the data meaning setting module 240, the data meaning estimation information based on the process model created by the process model creation module 250. Description of points similar to the first embodiment is appropriately omitted in the following.

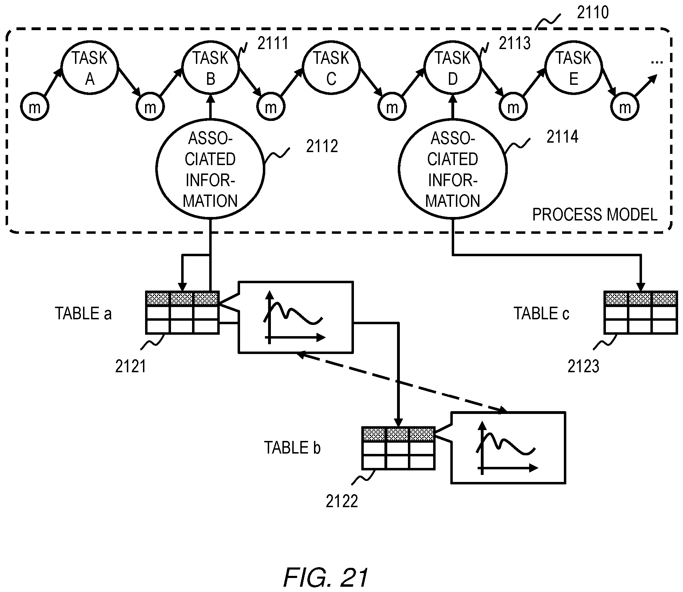

FIG. 21 is an explanatory diagram for illustrating an example of processing of estimating the data meaning information from the process model. A process model 2110 has been created by the process model creation module 250. In the process model 2110, a task-associated information node 2112 is connected to a task node 2111 indicating "task B." Information associated with the task-associated information node 2112 is a table 2121 (a name thereof is "table a") and a table 2122 (name thereof is "table b").

In the process model 2110, a task-associated information node 2114 is connected to a task node 2113 indicating "task D." Information associated with the task-associated information node 2114 is a table 2123 (name thereof is "table c").

Here, it is assumed that, by the data meaning setting module 240 providing the estimated table data meaning information on "table a" and "table b" to the process model creation module 250, association with the task-associated information node 2112 connected to the task node 2111 of "task B" in the process model 2110 is estimated.

Here, for example, when the data meaning setting module 240 determines that the data included in "table a" and the data included in "table b" correlate with each other, it is determined that the table data meaning information on "table a" and "table b" provided to the process model creation module 250 is appropriate, and when the data meaning setting module 240 determines that those pieces of data do not correlate with each other, it is determined that the table data meaning information on "table a" and "table b" provided to the process model creation module 250 is inappropriate.

For example, when the data meaning setting module 240 determines that the correlation between the data included in "table a" and the data included in "table c" is higher than the correlation between the data included in "table a" and the data included in "table b," "table a" and "table c" are to be associated with the same task-associated information.

Thus, in this case, the data meaning setting module 240 may determine that the table data meaning information on "table a," "table b," and "table c" provided to the process model creation module 250 is inappropriate.

The data meaning setting module 240 may use, as the above-mentioned correlation between the pieces of data, for example, an index indicating a mutual correlation between pieces of time-series data included in the data or may use an index indicating closeness between character strings of the table names. The data meaning setting module 240 may determine whether the table data meaning information is appropriate or inappropriate in accordance with whether or not the index indicating the correlation between pieces of data is equal to or larger than a predetermined threshold value.

The data meaning setting module 240 may again estimate the data meaning information for the table determined to have inappropriate table data meaning information. Specifically, for example, the data meaning setting module 240 may change the values of the parameters (for example, changes the values of S1, S2, S3, and S4 from initial values in accordance with user input) used to calculate the conformity, and may then again execute the data meaning estimation processing corresponding to the table data meaning information determined to be inappropriate, or may present the table data meaning information determined to be inappropriate and the corresponding table on the operation terminal 160, may set at least part of information included in the table data meaning information in accordance with user input (may assume that this at least part of information is correct), and may then execute again the data meaning candidate estimation processing and the data meaning estimation processing for the table.

For example, when three or more tables are associated with one task-associated information node, the data meaning setting module 240 may cluster those three or more tables in accordance with a predetermined algorithm, may determine that the table data meaning information of the tables belonging to a cluster having the largest number of tables is appropriate, and may determine that the table data meaning information of the tables belonging to clusters different from the cluster having the largest number of tables is inappropriate.

According to the above-mentioned embodiments, the process model creation system 110 can set the data meaning information for the site data, can create the process model based on the set meaning information, and can provide the process model to the information collection system 150. As a result, the task of creating the process model used in the information collection system 150 can be automated, and thus, for example, an effect that the collection and the analysis of the site data in the information collection system 150 can more easily be executed can be expected.

In the above-mentioned embodiments, the example in which the process model creation system 110 estimates the data meaning for the site data generated in the manufacturing process in the manufacturing site has been described, but the process model creation system 110 can be applied not only to the manufacturing site, but also to any industry type which is formed of a plurality of tasks and in which the site data is generated. For example, in the distribution industry or the transport industry, there exist a plurality of steps forming a transport process including reception, sorting, storage, packaging, and distribution of items, and hence the estimation of the meaning data for the site data relating to the transport process can be executed similarly to the case of the site data in the manufacturing site.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

**Claims**

1. An information processing system, comprising:

   a processor; and
   a memory,
   wherein the memory holds:

   start-to-completion achievement data which is selected from site data relating to a process including a plurality of tasks and in which a data item indicating a predetermined meaning is specified;
   meaning estimation target data selected from the site data;
   a feature amount of the data item of the start-to-completion achievement data indicating the predetermined meaning; and
a feature amount of each data item included in the meaning estimation target data, and

wherein the processor is configured to:

estimate a candidate of a data item indicating the predetermined meaning from the data items of the meaning estimation target data based on the feature amount of the data item of the start-to-completion achievement data indicating the predetermined meaning and the feature amount of each of the data item included in the meaning estimation target data;
execute comparison processing of comparing the start-to-completion achievement data and the meaning estimation target data in a case in which the candidate is the data item indicating the predetermined meaning with each other; and
estimate a data item indicating the predetermined meaning from the candidates based on a result of the comparison processing.

2. The information processing system according to claim 1, wherein the processor is configured to create a process model that models a relationship between the plurality of tasks included in the process based on the start-to-completion achievement data and a result of the estimation of the data item.

3. The information processing system according to claim 1,

wherein the data item indicating the predetermined meaning includes a tracking target identification item indicating information that identifies a tracking target in the process, a tracking location identification item indicating information that identifies a tracking location in the process, and a timing item indicating a timing at which the tracking target exists at the tracking location in the process, and
wherein the processor is configured to:

create, based on the tracking target identification item, the tracking location identification item, and the timing item of the start-to-completion achievement data, a process flow indicating information on passing of the tracking target through the tracking location; and
compare the meaning estimation target data in a case in which the candidate is the data item indicating the predetermined meaning and the process flow with each other in the comparison processing.

4. The information processing system according to claim 3, wherein the processor is configured to:

calculate a conformity between the meaning estimation target data in the case in which the candidate is the data item indicating the predetermined meaning and the process flow in the comparison processing; and
estimate, as the data item indicating the predetermined meaning, a candidate determined to have a high calculated conformity based on a predetermined condition.

5. The information processing system according to claim 4, wherein the processor is configured to calculate the conformity based on an index indicating a degree of consistency of a combination of the tracking target identification item, the tracking location identification item, and the timing item indicated by the candidate in the meaning estimation target data with a combination of the tracking target identification item, the tracking location identification item, and the timing item of the start-to-completion achievement data.

6. The information processing system according to claim 5, wherein the processor is configured to calculate the conformity based on the index and a score defined in advance in accordance with the combination of the tracking target identification item, the tracking location identification item, and the timing item indicated by the candidate.

7. The information processing system according to claim 4, wherein the processor is configured to estimate, when the processor determines that a combination including the timing item and a plurality of the tracking target identification items indicated by the candidate in the meaning estimation target data are consistent with a combination including the timing item and the tracking target identification item of the start-to-completion achievement data, that the meaning estimation target data is component input achievement data.

8. The information processing system according to claim 2, wherein the processor is configured to:

associate the site data including the meaning estimation target data with the process model based on the result of the estimation; and

determine whether a result of the estimation of the data item indicating the predetermined meaning is appropriate in the meaning estimation target data based on correlation among pieces of the site data associated with the process model.

9. The information processing system according to claim 8, wherein the processor is configured to:

receive input of information indicating some of data items indicating the predetermined meaning, for the meaning estimation target data determined to have an inappropriate result of the estimation; and

execute again processing of estimating the candidate, the comparison processing, and processing of estimating the data item indicating the predetermined meaning from the candidates while assuming that the information indicating the some of data items is correct.

10. An information processing method by an information processing system, the information processing system includes a processor and a memory, wherein the memory holds:

start-to-completion achievement data which is selected from site data relating to a process including a plurality of tasks and in which a data item indicating a predetermined meaning is specified;

meaning estimation target data selected from the site data;

a feature amount of the data item of the start-to-completion achievement data indicating the predetermined meaning; and

a feature amount of each data item included in the meaning estimation target data, and

the information processing method comprising:

estimating, by the processor, a candidate of a data item indicating the predetermined meaning from the data items of the meaning estimation target data based on the feature amount of the data item of the start-to-completion achievement data indicating the predetermined meaning and the feature amount of each of the data item included in the meaning estimation target data;

executing, by the processor, comparison processing of comparing the start-to-completion achievement data and the meaning estimation target data in a case in which the candidate is the data item indicating the predetermined meaning with each other; and

estimating, by the processor, a data item indicating the predetermined meaning from the candidates based on a result of the comparison processing.

*FIG. 2A*

110

PROCESS MODEL CREATION SYSTEM

| | | |
|---|---|---|
| CPU 1001 | MEMORY 1002 | AUXILIARY STORAGE DEVICE 1003 |
| INPUT DEVICE 1004 | DISPLAY DEVICE 1005 | COMMUNICATION DEVICE 1006 |

*FIG. 2B*

FIG. 3

SITE DATA (TABLE A)

410

| col1 | col2 | col3 | col4 | col5 | col6 | col7 | ... |
|------|------|------|------|------|------|------|-----|
| mat_1 | mat_type_1 | act_1 | act_type_a | 2024/01/01 10:00:00 | 1.0 | prt_1 | ... |
| mat_1 | mat_type_1 | act_1 | act_type_b | 2024/01/01 11:00:00 | 1.1 | prt_2 | ... |
| mat_1 | mat_type_1 | act_2 | act_type_c | 2024/01/01 12:00:00 | 1.3 | prt_3 | ... |
| mat_2 | mat_type_2 | act_1 | act_type_b | 2024/01/01 13:00:00 | 0.9 | prt_4 | ... |
| mat_2 | mat_type_2 | act_2 | act_type_c | 2024/01/01 14:00:00 | - | prt_5 | ... |
| ... | ... | ... | ... | ... | ... | ... | ... |

## FIG. 4A

420

| INFORMATION TYPE | DATA TYPE |
|------------------|-----------|
| PRODUCT IDENTIFIER | material_xxx |
| PRODUCT TYPE IDENTIFIER | material_type_xxx |
| WORK IDENTIFIER | activity_xxx |
| WORK TYPE IDENTIFIER | activity_type_xxx |
| DATE AND TIME OF WORK | YYYY/MM/DD   hh:mm:ss |
| DATE AND TIME OF RECORDING | YYYY/MM/DD   hh:mm:ss |
| COMPONENT IDENTIFIER | material_xxx |
| WORK-ASSOCIATED INFORMATION IDENTIFIER | related_xxx |
| WORK RESULT | XXXX |

## FIG. 4B

FIG. 5

FIG. 6

DATA MEANING INFORMATION 720

| TABLE | DATA MEANING | |
|---|---|---|
| TABLE A | MANUFACTURING TARGET ID | col1 |
| | TASK ID | col3 |
| | TASK EXECUTION TIME | col5 |
| ... | ... | |

721

FIG. 7

START

SET START-TO-COMPLETION
ACHIEVEMENT DATA $\sim$ S801

PROCESS FLOW CREATION
PROCESSING $\sim$ S802

DATA MEANING CANDIDATE
ESTIMATION PROCESSING $\sim$ S803

DATA MEANING ESTIMATION
PROCESSING $\sim$ S804

END

*FIG. 8*

PROCESS FLOW CREATION
PROCESSING

S901 — EXECUTE FOR ALL MANUFACTURING TARGET IDs EXISTING IN START-TO-COMPLETION ACHIEVEMENT DATA

S902 — ACQUIRE MANUFACTURING START-TO-COMPLETION ACHIEVEMENT WITH MANUFACTURING TARGET ID AS KEY

S903 — REARRANGE ACQUIRED MANUFACTURING START-TO-COMPLETION ACHIEVEMENT WITH TASK TIME INFORMATION AS KEY

S904 — ACQUIRE SEQUENCE OF TASK IDs IN MANUFACTURING START-TO-COMPLETION ACHIEVEMENT AFTER REARRANGEMENT

S905 — ASSOCIATE TASK NODES DISTINGUISHED BY TASK IDs VIA MATERIAL NODE TO CREATE PROCESS FLOW IN ORDER OF SEQUENCE

S906 — INTEGRATE ALL OF PROCESS FLOWS CREATED IN UNIT DISTINGUISHED BY MANUFACTURING TARGET ID TO CREATE INTEGRATED PROCESS FLOW

END

*FIG. 9*

1010

PROCESS FLOW OF mat_1

*FIG. 10A*

1020

PROCESS FLOW OF mat_2

*FIG. 10B*

1030

PROCESS FLOW OBTAINED BY
INTEGRATING PROCESS FLOWS OF mat_1 AND mat_2

*FIG. 10C*

```
       ┌──────────────────────────────┐
       │   DATA MEANING CANDIDATE     │
       │   ESTIMATION PROCESSING      │
       └──────────────────────────────┘
                      │
S1101  ┌──────────────────────────────────────────┐
       │ CALCULATE FEATURE AMOUNTS OF COLUMNS FROM │
       │ START-TO-COMPLETION ACHIEVEMENT DATA      │
       └──────────────────────────────────────────┘
                      │
S1102  ┌──────────────────────────────────────────┐
       │ EXECUTE FOR SITE DATA OF ESTIMATION TARGET│
       │ OTHER THAN START-TO-COMPLETION ACHIEVEMENT│
       │ DATA                                      │
       └──────────────────────────────────────────┘
                      │
S1103  ┌──────────────────────────────────────────┐
       │ EXECUTE FOR ALL COLUMNS IN TARGET DATA    │
       └──────────────────────────────────────────┘
                      │
S1104  ┌──────────────────────────────────────────┐
       │ CALCULATE FEATURE AMOUNT OF COLUMN        │
       └──────────────────────────────────────────┘
                      │
S1105  ┌──────────────────────────────────────────┐
       │ CALCULATE SIMILARITY BETWEEN FEATURE      │
       │ AMOUNT OF COLUMN OF SITE DATA AND FEATURE │
       │ AMOUNT OF COLUMN OF START-TO-COMPLETION   │
       │ ACHIEVEMENT DATA                          │
       └──────────────────────────────────────────┘
                      │
       ┌──────────────────────────────────────────┐
       └──────────────────────────────────────────┘
                      │
S1106  ┌──────────────────────────────────────────┐
       │ DETERMINE COLUMN HAVING HIGH SIMILARITY   │
       │ AS TABLE DATA MEANING CANDIDATE           │
       │ INFORMATION                               │
       └──────────────────────────────────────────┘
                      │
       ┌──────────────────────────────────────────┐
       └──────────────────────────────────────────┘
                      │
S1107  ┌──────────────────────────────────────────┐
       │ UNIFY TABLE DATA MEANING CANDIDATE        │
       │ INFORMATION TO CREATE DATA MEANING        │
       │ CANDIDATE INFORMATION                     │
       └──────────────────────────────────────────┘
                      │
                 ┌─────────┐
                 │   END   │
                 └─────────┘
```

*FIG. 11*

DATA MEANING ESTIMATION TARGET (TABLE B) 1210

| col_a | col_b | col_c | col_d | col_e | col_f | ... |
|-------|-------|-------|-------|-------|-------|-----|
| mat_11 | act_1 | act_type_a | 2024/01/05 10:00:00 | 2024/01/05 10:00:00 | prt_1 | ... |
| mat_11 | act_2 | act_type_b | 2024/01/05 11:00:00 | 2024/01/05 11:00:00 | prt_2 | ... |
| mat_12 | act_1 | act_type_a | 2024/01/05 12:00:00 | 2024/01/05 12:00:00 | prt_3 | ... |
| mat_12 | act_2 | act_type_b | 2024/01/05 13:00:00 | 2024/01/05 13:00:00 | prt_4 | ... |
| mat_12 | act_3 | act_type_c | 2024/01/05 14:00:00 | 2024/01/05 14:00:00 | prt_5 | ... |
| ... | ... | ... | ... | ... | | ... |

*FIG. 12A*

DATA MEANING CANDIDATE INFORMATION 1220

| TABLE | DATA MEANING CANDIDATE | |
|-------|------------------------|---|
| TABLE B | MANUFACTURING TARGET ID CANDIDATE | [col_a, col_f] |
| | TASK ID CANDIDATE | [col_b, col_c] |
| | TASK EXECUTION TIME CANDIDATE | [col_d, col_e] |
| ... | ... | |

1221

*FIG. 12B*

```
           ┌─────────────────────────┐
           │      DATA MEANING       │
           │  ESTIMATION PROCESSING  │
           └─────────────────────────┘
                        │
        ┌───────────────────────────────────┐
S1301   │  EXECUTE FOR SITE DATA OF ESTIMATION │
        │   TARGET OTHER THAN START-TO-      │
        │   COMPLETION ACHIEVEMENT DATA      │
        └───────────────────────────────────┘
                        │
        ┌───────────────────────────────────┐
S1302   │  EXECUTE FOR EACH COMBINATION OF   │
        │   COLUMNS IN TABLE DATA MEANING    │
        │        CANDIDATE INFORMATION       │
        └───────────────────────────────────┘
                        │
        ┌───────────────────────────────────┐
S1303   │   CALCULATE CONFORMITY TO PROCESS FLOW │
        └───────────────────────────────────┘
                        │
        ┌───────────────────────────────────┐
        │                                   │
        └───────────────────────────────────┘
                        │
        ┌───────────────────────────────────┐
S1304   │  SET COMBINATION PATTERN OF COLUMNS HAVING │
        │  HIGH CONFORMITY TO PROCESS FLOW AS TABLE  │
        │       DATA MEANING INFORMATION     │
        └───────────────────────────────────┘
                        │
        ┌───────────────────────────────────┐
        │                                   │
        └───────────────────────────────────┘
                        │
                        ▼
               ┌─────────────┐
               │     END     │
               └─────────────┘
```

*FIG. 13*

FIG. 14

FIG. 15

FIG. 16

FIG. 17

1810

START-TO-COMPLETION
ACHIEVEMENT DATA SETTING

1820

DATA LAKE SELECTION

| Host | 10.232.xxx.yyy |

| Port | zzzz |

1830

TABLE LIST                    CREATE FLOW

| TABLE NAME | RECORD ACQUISITION | STATUS |
|---|---|---|
| table_aaa | EXECUTE | SET |
| table_bbb | EXECUTE | N/A |
| table_ccc | EXECUTE | - |

1840

TABLE DETAILS

| col1 | col2 | col3 |
|---|---|---|
| xxx1 | yyy1 | zzz1 |
| xxx2 | yyy2 | zzz2 |
| xxx3 | yyy3 | zzz3 |
| xxx4 | yyy4 | zzz4 |

| MANUFACTURING TARGET ID | col1 × |

| TASK ID | col2 × |

| TASK EXECUTION TIME | col3 ×   col4 × |

REGISTER        N/A

*FIG. 18A*

FIG. 18B

1910

DATA ACQUISITION

1920

DATA LAKE SELECTION

| Host | 10.232.xxx.yyy | | Port | zzzz |

1930

TABLE LIST          ( EXECUTE ESTIMATION )

| TABLE NAME | RECORD ACQUISITION | STATUS | TARGET |
|------------|--------------------|--------|--------|
| table_aaa  | ( EXECUTE )        | SET    | ☑      |
| table_bbb  | ( EXECUTE )        | -      | ☑      |
| table_ccc  | ( EXECUTE )        | -      | ☐      |

1940

TABLE DETAILS

| col1 | col2 | col3 |
|------|------|------|
| xxx1 | yyy1 | zzz1 |
| xxx2 | yyy2 | zzz2 |
| xxx3 | yyy3 | zzz3 |
| xxx4 | yyy4 | zzz4 |

| MANUFACTURING TARGET ID | ( col1 × ) |

| TASK ID | ( col2 × ) |

| TASK EXECUTION TIME | ( col3 × ) ( col4 × ) |

( REGISTER )

*FIG. 19A*

1950

**ESTIMATION RESULT DISPLAY**

STEP

TASK  TASK  TASK   TASK  TASK

MATE-RIAL  MATE-RIAL  MATE-RIAL  MATE-RIAL  MATE-RIAL  MATE-RIAL

ASSO-CIATED INFOR-MATION  ASSO-CIATED INFOR-MATION  ASSO-CIATED INFOR-MATION

STEP

TASK  TASK  TASK

MATE-RIAL  MATE-RIAL  MATE-RIAL  MATE-RIAL

ASSO-CIATED INFOR-MATION

**UNASSOCIATED TABLE**

| TABLE NAME | RECORD ACQUISITION |
|---|---|
| table_aaa | EXECUTE |
| table_bbb | EXECUTE |

*FIG. 19B*

START-TO-COMPLETION
ACHIEVEMENT DATA          2010

| col1 | col2 | col3 | ... |
|------|------|------|-----|
| mat_1 | TASK A | 2024/01/01 10:00:00 | ... |
| mat_1 | TASK B | 2024/01/01 11:00:00 | ... |
| mat_1 | TASK C | 2024/01/01 12:00:00 | ... |
| mat_2 | TASK P | 2024/01/02 10:00:00 | ... |
| mat_2 | TASK Q | 2024/01/02 11:00:00 | ... |
| mat_2 | TASK R | 2024/01/02 12:00:00 | ... |
| ... | ... | ... | ... |

2020

PROCESS FLOW OF mat_1

2030

PROCESS FLOW OF mat_2

DATA MEANING
ESTIMATION TARGET
(TABLE F)          2040

| col_1 | col_2 | col_3 | ... |
|-------|-------|-------|-----|
| mat_1 | mat_2 | 2024/01/02 10:00:00 | ... |
| mat_x | mat_y | 2024/01/02 11:00:00 | ... |
| mat_a | mat_b | 2024/01/02 12:00:00 | ... |
| ... | ... | ... | ... |

1220

| TABLE | DATA MEANING CANDIDATE | |
|-------|------------------------|---|
| TABLE F | MANUFACTURING TARGET ID CANDIDATE | [col_1, col_2] |
| | TASK ID CANDIDATE | [] |
| | TASK EXECUTION TIME CANDIDATE | [col_3] |
| ... | ... | |

FIG. 20

*FIG. 21*

Europäisches Patentamt

European Patent Office

Office européen des brevets

# EUROPEAN SEARCH REPORT

**Application Number**

EP 25 16 0637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/193354 A1 (NOGI KEITA [JP] ET AL) 18 June 2020 (2020-06-18) * abstract * * paragraphs [0035], [0048], [0050] – [0060] * ----- | 1-10 | INV. G06Q10/0631 G06Q10/0637 G06Q10/067 G06Q10/10 G06Q50/04 |
| Y | WO 2021/124469 A1 (HITACHI LTD [JP]) 24 June 2021 (2021-06-24) * abstract * * paragraphs [0077] – [0085] * ----- | 1-10 | |

TECHNICAL FIELDS SEARCHED (IPC)

G06Q

The present search report has been drawn up for all claims

| Place of search | Date of completion of the search | Examiner |
|---|---|---|
| Munich | 29 July 2025 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                         

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0637

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2025

| Patent document cited in search report | Publication date | Patent family member(s) | Publication date |
|---|---|---|---|
| US 2020193354 A1 | 18-06-2020 | CN 111308925 A<br>JP 7171407 B2<br>JP 2020095440 A<br>US 2020193354 A1 | 19-06-2020<br>15-11-2022<br>18-06-2020<br>18-06-2020 |
| WO 2021124469 A1 | 24-06-2021 | NONE | |

EPO FORM P0459

For more details about this annex : see Official Journal of the European Patent Office, No. 12/82

**EP 4 651 048 A1**

**Patent documents cited in the description**

- JP 2024079163 A
- JP 2022020927 A
- WO 2018025707 A1